# EUROPÄISCHE PATENTSCHRIFT

(11) **EP 4 727 687 B1**
(45) Veröffentlichungstag und Bekanntmachung des Hinweises auf die Patenterteilung: **18.11.2026**
(21) Anmeldenummer: 25764623.2
(22) Anmeldetag: 04.09.2025
(51) Int. Cl.: B01J 8/02, B01J 8/04

(54) **REAKTORSYSTEM MIT GESCHICHTETEM FÜLLMATERIAL**
REACTOR SYSTEM WITH LAYERED FILLER MATERIAL
SYSTÈME DE RÉACTEUR COMPRENANT UN MATÉRIAU DE CHARGE EN COUCHES

(30) Priorität: 05.09.2024 DE 102024125430
(43) Veröffentlichungstag der Anmeldung: 22.04.2026
(73) Patentinhaber: Spark E-Fuels GmbH, 12107 Berlin (DE)
(72) Erfinder: BAUER, Julia, 37269 Eschwege (DE); ZIMMERMANN, Arno W., 10781 Berlin (DE); BÖSL, Mathias, 80804 München (DE); NGUYEN, Anh Dung, 10177 Berlin (DE)
(74) Vertreter: Gleiss Große Schrell und Partner mbB
(86) Internationale Anmeldenummer: PCT/EP2025/075193
(87) Internationale Veröffentlichungsnummer: WO 2026/052722

(56) Entgegenhaltungen:
- EP-A1- 3 319 720
- EP-B1- 3 319 720
- CA-A1- 2 585 042
- US-A1- 2006 204 414
- US-A1- 2019 322 949
- US-A1- 20240 139 702

## Beschreibung

Die vorliegende Erfindung betrifft ein Reaktorsystem zur Durchführung einer chemischen Reaktion im Gegenstromprinzip sowie ein Verfahren zur Durchführung einer chemischen Reaktion im Gegenstromprinzip unter Verwendung eines erfindungsgemäßen Reaktorsystems.

Die Reversibilität unterschiedlicher ökonomisch relevanter chemischer Reaktionen erfordert eine Anpassung der Reaktionsbedingungen, um die Lage des chemischen Gleichgewichts möglichst weit auf die Seite der gewünschten Produkte zu verschieben. Wichtige Stellschrauben sind hierbei die Temperatur, der Druck und die Konzentration der Reaktanten während der Reaktion. Als Beispiele für wirtschaftlich wichtige Prozesse, die mit dieser Problematik konfrontiert sind, können die Synthesegasherstellung aus Kohlenstoffdioxid und Wasserstoff (Reverse Wassergas-Shift Reaktion, RWGS), die Synthesegasherstellung aus Kohlenstoffdioxid mit Methan als Reduktionsmittel, die Synthesegasherstellung aus Kohlenstoffdioxid aus Methan und Wasser und die Ammoniakherstellung aus Stickstoff und Wasserstoff genannt werden. Bei einer unvollständigen Umsetzung der Edukte zu den gewünschten Produkten bedarf es oftmals einer aufwendigen und ressourcenintensiven Abtrennung und Rückführung von nicht umgesetzten Edukten. Auch einer Anpassung der Reaktionstemperatur und des Reaktionsdrucks zur Verschiebung des chemischen Gleichgewichts sind nicht zuletzt unter dem Aspekt der Wirtschaftlichkeit Grenzen gesetzt.

Einen Ansatz zur Steigerung der Produktivität und Wirtschaftlichkeit bietet das sogenannte Chemical Looping-Verfahren, bei dem die thermodynamische Limitierung durch örtliche oder zeitliche Trennung der Reduktions- und Oxidationsreaktion umgangen wird. Im Falle der RWGS zur Herstellung von Synthesegas aus Kohlenstoffdioxid und Wasserstoff ist der Reaktor hierzu mit einem Sauerstoffspeichermaterial (Oxygen Storage Material - OSM) befüllt. In den Reaktoreingang werden abwechselnd die Edukte CO₂ und H₂ eingeleitet, sodass es zunächst im Reaktor zur Reduktion von CO₂ zu CO und einer Oxidation des OSM kommt und in einem nächsten Schritt eine Regenerierung/Reduktion des OSM durch Oxidation von H₂ zu H₂O erfolgt. Am Reaktorausgang kann dann CO/CO₂ und H₂/H₂O entnommen werden. Durch die Durchführung der RWGS in Chemical Looping-Verfahren (RWGS-CL) können neben der erhöhten Ausbeute vorteilhafterweise auch separate Gasströme erhalten werden, was die nachgelagerte Abtrennung und Rückführung deutlich vereinfachen oder sogar überflüssig machen kann. Durch die Trennung der Halbreaktionen voneinander kommt es auch zu einer deutlichen Verminderung oder Vermeidung der Bildung von unerwünschten Nebenprodukten. Allerdings sind die Umsätze von CO₂ zu CO und von H₂ zu H₂O durch das chemische Potential für Oxidation und Reduktion entlang des OSM-Bettes vom Reaktoreingang zum Reaktorausgang bei den gewählten Reaktionsbedingungen limitiert.

Um diese Limitierung zu überwinden, beschreibt die EP 3 319 720 B1 eine Optimierung des chemischen Potentials durch Etablierung eines Gradienten bezüglich des Oxidationszustandes entlang des OSM-Bettes im Reaktor. Dabei ist der Reaktor mit einem nicht-stöchiometrischen OSM befüllt. Dem Reaktor werden abwechselnd CO₂ und H₂ zugeführt, gegebenenfalls mit einer dazwischenliegenden Spülphase durch ein drittes Gas. Allerdings erfolgt die Einleitung der beiden Reaktionsgase in Gegenstromprinzip, das heißt, dass bei jedem Wechsel des durch das OSM-Bett des Reaktors geleiteten Reaktionsgases zur Oxidation/Reduktion des OSM auch die Umkehrung der Flussrichtung erfolgt. Aus dem Reaktoreingang während der Oxidation wird somit bei der darauffolgenden Reduktion der Reaktorausgang und umgekehrt. Gemäß dieser Prozessführung muss ein nicht-stöchiometrisches Oxid verwendet werden, um einen positiven Effekt auf den erzielbaren Umsatz von CO₂ zu CO und H₂ zu H₂O zu erzielen. Dabei erlaubt das nicht-stöchiometrische Oxid die Ausbildung eines des Gradienten in Bezug auf dessen Oxidationsstufe entlang des OSM-Betts, sodass das chemische Potential für die jeweilige Halbreaktion am dazugehörigen Reaktorende optimal ist. (Bulfin et al., Chemical Engineering Journal 461 (2023) 141896). Nicht-stöchiometrische OSMs haben allerdings in der Regel deutlich geringere Sauerstoffspeicherkapazitäten (Oxygen Storage Capacity - OSC) als stöchiometrische OSMs erreichen können. Die Nutzung von nicht-stöchiometrischen Oxiden führt daher zu einem deutlich größeren notwendigen Volumen des Reaktors.

Der vorliegenden Erfindung liegt daher das technische Problem zugrunde die Nachteile der Reaktoren aus dem Stand der Technik zu überwinden und insbesondere ein Reaktorsystem zur Durchführung einer chemischen Reaktion im Gegenstromprinzip sowie ein Verfahren zur Durchführung einer chemischen Reaktion im Gegenstromprinzip bereitzustellen, der/das es erlaubt, die Ausbeute und/oder Produktivität des gewünschten Reaktionsproduktes pro Zyklus zu steigern, beziehungsweise die Reaktorgröße zur Umsetzung einer gewissen Stoffmenge an Edukten in Reaktionszyklus zu reduzieren.

Das der Erfindung zugrundeliegende Problem wird durch den Gegenstand der unabhängigen Ansprüche gelöst.

Dabei betrifft die vorliegende Erfindung ein Reaktorsystem zur Durchführung einer chemischen Reaktion im Gegenstromprinzip, umfassend:
a) mindestens einen Festbett-Reaktor,
b) mindestens einen Reaktoreingang des Reaktorsystems,
c) mindestens einen Reaktorausgang des Reaktorsystems, und
d) ein zwischen dem mindestens einen Reaktoreingang und dem mindestens einen Reaktorausgang angeordnetes Füllmaterial,

dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

   MₓX_{y}

   aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei X mindestens ein Element ist ausgewählt aus der Gruppe bestehend aus O, N, C, S, und H, wobei x und y jeweils ganze Zahlen sind, die für eine stöchiometrische Bindung zwischen M und X erforderlich sind,
wobei die Aufnahme/Abgabe von X bei der zur Durchführung der chemischen Reaktion verwendeten Temperatur eine bis höchstens vier Phasenumwandlungen in dem mindestens einen stöchiometrischen Material hervorruft,
und wobei eine zweite Schicht B mindestens ein nicht-stöchiometrisches Material der Formel (2):

   MₓX_{y(1-z)}

   aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei X mindestens ein Element ist ausgewählt aus der Gruppe bestehend aus O, N, C, S, und H, wobei x und y jeweils ganze Zahlen sind, die für eine stöchiometrische Bindung zwischen M und X erforderlich sind, wobei gilt: 0 < z < 1 und 0 > z > -1, und wobei das Material in der Lage ist eine Reihe an Werten für z anzunehmen.

Das erfindungsgemäße Reaktorsystem zeichnet sich insbesondere durch das Vorliegen eines geschichteten Füllmaterials zwischen dem mindestens einen Reaktoreingang und dem mindestens einen Reaktorausgang des Reaktorsystems aus, wobei das Füllmaterial in einer ersten Schicht A mindestens ein stöchiometrisches Material der allgemeinen Formel MₓX_{y} und in einer zweiten Schicht B mindestens ein nicht-stöchiometrisches Material der allgemeinen Formel MₓX_{y(1-z)} aufweist. Die Anordnung des stöchiometrischen und nicht-stöchiometrischen Materials in den Schichten A und B zwischen dem mindestens einen Reaktoreingang und dem mindestens einen Reaktorausgang des Reaktorsystems führt dazu, dass eine in den Reaktoreingang eingeleitete chemische Spezies, insbesondere ein in den Reaktoreingang eingeleitetes Gas, auf seinem Weg vom mindestens einen Reaktoreingang des Reaktorsystems zum mindestens einen Reaktorausgang des Reaktorsystems die mindestens zwei unterschiedlichen Schichten durchströmt, insbesondere mit dem mindestens einen stöchiometrischen Material der Formel (1) der ersten Schicht A und dem mindestens einen nicht-stöchiometrischen Material der Formel (2) der zweiten Schicht B in Kontakt tritt. Erfindungsgemäß ist demnach vorgesehen, dass das mindestens eine stöchiometrische Material der Formel (1) und das mindestens eine nicht-stöchiometrische Material der Formel (2) des Füllmaterials nicht miteinander vermischt vorliegen, sondern voneinander abgrenzbare, insbesondere voneinander abgegrenzte, Bereiche innerhalb des Füllmaterials vorliegen, die aufgrund ihrer chemischen Zusammensetzung spezifische chemische und physikalische Eigenschaften aufweisen. Dabei kann der Übergang zwischen den mindestens zwei Schichten des Füllmaterial erfindungsgemäß fließend oder (trenn)scharf sein.

Erfindungsgemäß kann vorgesehen sein, dass das Reaktorsystem zur Durchführung einer chemischen Reaktion im Gegenstromprinzip aus einem Festbett-Reaktor besteht, in dem sich das Füllmaterial mit den mindestens zwei Schichten A und B befindet.

In einer weiteren Ausführungsform der vorliegenden Erfindung umfasst das Reaktorsystem zur Durchführung einer chemischen Reaktion im Gegenstromprinzip mindestens zwei, bevorzugt mindestens drei, bevorzugt mindestens vier, insbesondere genau zwei, genau drei oder genau vier, besonders bevorzugt eine der Anzahl an unterschiedlichen Schichten entsprechende Anzahl an, in Reihe angeordnete Festbett-Reaktoren. Gemäß dieser bevorzugten Ausführungsform ist das Füllmaterial des Reaktorsystems auf die unterschiedlichen Festbett-Reaktoren zwischen dem mindestens einen Reaktoreingang und dem mindestens einen Reaktorausgang des Reaktorsystems verteilt. So kann beispielsweise vorgesehen sein, dass die mindestens zwei Schichten in einem der in Reihe angeordneten Festbett-Reaktoren vorliegen oder dass einer der in Reihe angeordneten Festbett-Reaktoren die Schicht A aufweist und ein weiterer der in Reihe angeordneten Festbett-Reaktoren die Schicht B aufweist. Erfindungsgemäß kann auch vorgesehen sein, dass einer der in Reihe angeordneten Festbett-Reaktoren die Schichten A und C aufweist und ein weiterer der in Reihe angeordneten Festbett-Reaktoren die Schicht B aufweist. Eine Anordnung der einzelnen Schichten des Füllmaterials in verschiedenen in Reihe miteinander verbundenen Festbett-Reaktoren des Reaktorsystems hat den Vorteil, dass auf diese Weise keine komplizierte geschichtete Befüllung eines Reaktors mit dem mindestens einen stöchiometrischen Material und dem mindestens einen nicht-stöchiometrischen Material und gegebenenfalls weiteren Materialien erfolgen muss. Dabei ist das Reaktorsystem gemäß der vorliegenden Erfindung in dieser Ausführungsform so ausgestaltet, dass die einzelnen Fettbett-Reaktoren miteinander in Fluidverbindung stehen, sodass ein in den mindestens einen Reaktoreingang beziehungsweise in den mindestens einen Reaktorausgang eingeleitetes Gas nacheinander die in Reihe angeordneten Festbett-Reaktoren und damit verbunden die mindestens zwei Schichten des Füllmaterials des Reaktorsystems durchströmt.

In einer bevorzugten Ausführungsform der vorliegenden Erfindung handelt es sich bei M des mindestens einen stöchiometrischen Materials der Formel (1) um mindestens ein metallisches oder halbmetallisches Element, bevorzugt ausgewählt aus der Gruppe bestehend aus Alkimetallen, Erdalkalimetallen, Übergangsmetallen, Lanthanoide, Actinoide und Metallen. Besonders bevorzugt ist M des mindestens einen stöchiometrischen Materials der Formel (1) mindestens ein metallisches Element ausgewählt aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi.

Erfindungsgemäß ist X des mindestens einen stöchiometrischen Materials der Formel (1) mindestens ein Element ausgewählt aus der Gruppe bestehend aus O, N, C, S, und H. In einer bevorzugten Ausführungsform der vorliegenden Erfindung handelt es sich bei X des mindestens einen stöchiometrischen Materials der Formel (1) um Sauerstoff (O). Gemäß einer bevorzugten Ausführungsform der vorliegenden Erfindung handelt es sich bei X des mindestens einen stöchiometrischen Materials der Formel (1) um Stickstoff (N). Erfindungsgemäß kann auch vorgesehen sein, dass es sich bei X des mindestens einen stöchiometrischen Materials der Formel (1) um Kohlenstoff (C) handelt. In einer anderen bevorzugten Ausführungsform der vorliegenden Erfindung handelt es sich bei X des mindestens einen stöchiometrischen Materials der Formel (1) um Oxycarbid (C_{y1}O_{y2}) mit (y1 + y2) = y. In einer weiteren bevorzugten Ausführungsform der vorliegenden Erfindung handelt es sich bei X des mindestens einen stöchiometrischen Materials der Formel (1) um Schwefel (S). Gemäß einer anderen bevorzugten Ausführungsform der vorliegenden Erfindung handelt es sich bei X des mindestens einen stöchiometrischen Materials der Formel (1) um Wasserstoff (H).

In einer weiteren bevorzugten Ausführungsform der vorliegenden Erfindung umfasst M des mindestens einen stöchiometrischen Materials der Formel (1) mindestens zwei, bevorzugt mindestens drei, metallische oder halbmetallische Elemente. Erfindungsgemäß kann beispielsweise vorgesehen sein, dass M des mindestens einen stöchiometrischen Materials der Formel (1) ein Element, bevorzugt zwei Elemente, bevorzugt drei Elemente, bevorzugt vier Elemente, umfasst.

Gemäß einer bevorzugten Ausführungsform der vorliegenden Erfindung ist M des mindestens einen nicht-stöchiometrischen Materials der Formel (2) mindestens ein metallisches oder halbmetallisches Element, bevorzugt ausgewählt aus der Gruppe bestehend aus Alkimetallen, Erdalkalimetallen, Übergangsmetallen, Lanthanoide, Actinoide und Metallen. Besonders bevorzugt ist M des mindestens einen nicht-stöchiometrischen Materials der Formel (2) mindestens ein metallisches Element ausgewählt aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi.

Erfindungsgemäß ist X des mindestens einen nicht-stöchiometrischen Materials der Formel (2) mindestens ein Element ausgewählt aus der Gruppe bestehend aus O, N, C, S, und H. Bevorzugt handelt es sich bei X des mindestens einen nicht-stöchiometrischen Materials der Formel (2) um das gleiche Element wie bei X des stöchiometrischen Materials der Formel (1).

Bevorzugt handelt es sich X des mindestens einen nicht-stöchiometrischen Materials der Formel (2) um Sauerstoff (O). In einer anderen bevorzugten Ausführungsform der vorliegenden Erfindung handelt es sich bei X des mindestens einen nicht-stöchiometrischen Materials der Formel (2) um Stickstoff (N). Erfindungsgemäß kann auch vorgesehen sein, dass es sich bei X des mindestens einen nicht-stöchiometrischen Materials der Formel (2) um Kohlenstoff (C) handelt. In einer bevorzugten Ausführungsform der vorliegenden Erfindung handelt es sich bei X des mindestens einen nicht-stöchiometrischen Materials der Formel (2) um Oxycarbid (C_{y1}O_{y2}) mit (y1 + y2) = y. Gemäß einer bevorzugten Ausführungsform der vorliegenden Erfindung handelt es sich bei X des mindestens einen nicht-stöchiometrischen Materials der Formel (2) um Schwefel (S). In einer bevorzugte Ausführungsform der Erfindung handelt es sich bei X des mindestens einen nicht-stöchiometrischen Materials der Formel (2) um Wasserstoff (H).

In einer bevorzugten Ausführungsform der vorliegenden Erfindung umfasst M des mindestens einen nicht-stöchiometrischen Materials der Formel (2) mindestens zwei, bevorzugt mindestens drei, metallische oder halbmetallische Elemente. Erfindungsgemäß kann vorgesehen sein, dass M des mindestens einen nicht-stöchiometrischen Materials der Formel (2) ein Element, bevorzugt zwei Elemente, bevorzugt drei Elemente, bevorzugt vier Elemente, umfasst.

In einer bevorzugten Ausführungsform der vorliegenden Erfindung weist das mindestens eine Füllmaterial zwischen dem Reaktoreingang und dem Reaktorausgang des Reaktorsystems mindestens drei Schichten auf. Besonders bevorzugt weist die dritte Schicht C mindestens ein nicht-stöchiometrisches Material der Formel (2) auf, wobei M mindestens ein metallisches oder halbmetallisches Element ist, bevorzugt mindestens ein metallisches Element ausgewählt aus der Gruppe bestehend aus Alkimetallen, Erdalkalimetallen, Übergangsmetallen, Lanthanoide, Actinoide und Metallen, besonders bevorzugt mindestens ein metallisches Element ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei X mindestens ein Element ist ausgewählt aus der Gruppe bestehend aus O, N, C, S, und H, wobei x und y jeweils ganze Zahlen sind, die für eine stöchiometrische Bindung zwischen M und X erforderlich sind, wobei gilt: 0 < z < 1 und 0 > z > -1, und wobei das Material in der Lage ist eine Reihe an Werten für z anzunehmen.

Besonders bevorzugt handelt es sich bei X des nicht-stöchiometrischen Materials der Formel (2) der Schicht C um das gleiche Element wie bei X des stöchiometrischen Materials der Formel (1).

In einer besonders bevorzugten Ausführungsform ist die erste, mindestens ein stöchiometrisches Material der Formel (1) aufweisende Schicht A des Füllmaterials zwischen der zweiten Schicht B und der dritten Schicht C angeordnet. Gemäß dieser Ausführungsform weist das Füllmaterial zwischen dem Reaktoreingang und dem Reaktorausgang eine erste Schicht A, eine an Schicht A anschließende dritte Schicht C und eine an Schicht A anschließende zweite Schicht B auf.

Erfindungsgemäß kann beispielsweise auch vorgesehen sein, dass die Schichten A, B und C nacheinander folgend zwischen dem mindestens einen Reaktoreingang und dem mindestens einen Reaktorausgang angeordnet sind. Gemäß dieser Ausführungsform weist das Füllmaterial zwischen dem Reaktoreingang und dem Reaktorausgang eine erste Schicht A, eine an Schicht A anschließende zweite Schicht B und eine an Schicht B anschließende dritte Schicht C auf.

In einer bevorzugten Ausführungsform der vorliegenden Erfindung handelt es sich bei dem nicht-stöchiometrischen Material der zweiten Schicht B und dem nicht-stöchiometrischen Material der dritten Schicht C um unterschiedliche Materialien. Erfindungsgemäß kann auch vorgesehen sein, dass es sich bei dem nicht-stöchiometrischen Material der zweiten Schicht B und dem nicht-stöchiometrischen Material der dritten Schicht C um das gleiche Material handelt.

In einer weiteren bevorzugten Ausführungsform der vorliegenden Erfindung weist das mindestens eine Füllmaterial zwischen dem Reaktoreingang und dem Reaktorausgang des Reaktorsystems mindestens vier, bevorzugt mindestens fünf, bevorzugt mindestens sechs, Schichten, auf. Gemäß einer bevorzugten Ausführungsform der Erfindung kann vorgesehen sein, dass die unterschiedlichen Schichten in alternierender Reihenfolge mindestens ein stöchiometrisches Material der Formel (1) und mindestens ein nicht-stöchiometrisches Material der Formel (2) aufweisen. Erfindungsgemäß kann beispielsweise auch vorgesehen sein, dass sich im Bereich des mindestens einen Reaktoreingangs und im Bereich des mindestens einen Reaktorausgang jeweils mindestens eine mindestens ein stöchiometrisches Material der Formel (1) aufweisende Schicht befindet und es sich bei den dazwischenliegenden Schichten jeweils um eine mindestens ein nicht-stöchiometrisches Material der Formel (2) aufweisende Schicht handelt. Es kann erfindungsgemäß beispielsweise auch vorgesehen sein, dass sich im Bereich des mindestens einen Reaktoreingangs und im Bereich des mindestens einen Reaktorausgang jeweils mindestens eine mindestens ein nicht-stöchiometrisches Material der Formel (2) aufweisende Schicht befindet und es sich bei mindestens einer der dazwischenliegenden Schichten um eine mindestens ein stöchiometrisches Material der Formel (1) aufweisende Schicht handelt.

Gemäß einer weiteren bevorzugten Ausführungsform der vorliegenden Erfindung beträgt das Verhältnis (w/w) von nicht-stöchiometrischem Material der Formel (2) zu stöchiometrischem Material der Formel (1) in dem Füllmaterial des Reaktorsystems mindestens 1, bevorzugt mindestens 2, bevorzugt mindestens 3, bevorzugt mindestens 4, bevorzugt mindestens 5, bevorzugt mindestens 6, bevorzugt mindestens 7, bevorzugt mindestens 8, bevorzugt mindestens 9, bevorzugt mindestens 10.

Erfindungsgemäß kann auch vorgesehen sein, dass das Verhältnis (w/w) von nicht-stöchiometrischem Material der Formel (2) zu stöchiometrischem Material der Formel (1) in dem Füllmaterial des Reaktorsystems höchstens 50, bevorzugt höchstens 45, bevorzugt höchstens 40, bevorzugt höchstens 35, bevorzugt höchstens 30, bevorzugt höchstens 25, bevorzugt höchstens 20, bevorzugt höchstens 15, bevorzugt höchstens 10, bevorzugt höchstens 9, bevorzugt höchstens 8, bevorzugt höchstens 7, bevorzugt höchstens 6, bevorzugt höchstens 5, beträgt.

In einer weiteren bevorzugten Ausführungsform beträgt das Verhältnis (w/w) von nicht-stöchiometrischem Material der Formel (2) zu stöchiometrischem Material der Formel (1) in dem Füllmaterial des Reaktorsystems 1 bis 100, bevorzugt 2 bis 50, bevorzugt 5 bis 20, besonders bevorzugt 8 bis 15.

Bevorzugt weist das Füllmaterial des erfindungsgemäßen Reaktorsystems mindestens 1 Gew.-%, bevorzugt mindestens 2,5 Gew.-%, bevorzugt mindestens 5 Gew.-%, bevorzugt mindestens 7,5 Gew.-%, bevorzugt mindestens 10 Gew.-%, bevorzugt mindestens 12,5 Gew.-%, bevorzugt mindestens 15 Gew.-%, bevorzugt mindestens 17,5 Gew.-%, bevorzugt mindestens 20 Gew.-%, bevorzugt mindestens 22,5 Gew.-%, bevorzugt mindestens 25 Gew.-%, bevorzugt mindestens 27,5 Gew.-%, bevorzugt mindestens 30 Gew.-%, nicht-stöchiometrisches Material der Formel (2) auf (jeweils bezogen auf das Gesamtgewicht des Füllmaterials).

In einer weiteren bevorzugten Ausführungsform der vorliegenden Erfindung weist das Füllmaterial des erfindungsgemäßen Reaktorsystems höchstens 50 Gew.-%, bevorzugt höchstens 45 Gew.-%, bevorzugt höchstens 40 Gew.-%, bevorzugt höchstens 35 Gew.-%, bevorzugt höchstens 30 Gew.-%, bevorzugt höchstens 25 Gew.-%, bevorzugt höchstens 20 Gew.-%, bevorzugt höchstens 15 Gew.-%, nicht-stöchiometrisches Material der Formel (2) auf (jeweils bezogen auf das Gesamtgewicht des Füllmaterials).

Besonders bevorzugt weist das Füllmaterial des erfindungsgemäßen Reaktorsystems 1 bis 50 Gew.-%, bevorzugt 1 bis 40 Gew.-%, bevorzugt 2,5 bis 30 Gew.-%, bevorzugt 2,5 bis 25 Gew.- %, bevorzugt 5 bis 20 Gew.-%, bevorzugt 5 bis 15 Gew.-%, nicht-stöchiometrisches Material der Formel (2) auf (jeweils bezogen auf das Gesamtgewicht des Füllmaterials).

In einer bevorzugten Ausführungsform der vorliegenden Erfindung weisen die Schichten A, B, und/oder C, bevorzugt alle Schichten, des Füllmaterials, mehr als 50 Gew.-%, bevorzugt mindestens 55 Gew.-%, bevorzugt mindestens 60 Gew.-%, bevorzugt mindestens 70 Gew.-%, bevorzugt mindestens 75 Gew.-%, bevorzugt mindestens 80 Gew.-%, bevorzugt mindestens 85 Gew.-%, bevorzugt mindestens 90 Gew.-%, bevorzugt mindestens 95 Gew.-%, bevorzugt mindestens 96 Gew.-%, bevorzugt mindestens 97 Gew.-%, bevorzugt mindestens 98 Gew.-%, bevorzugt mindestens 99 Gew.-%, des mindestens einen stöchiometrischen Materials der Formel (1) beziehungsweise des mindestens einen nicht-stöchiometrischen Materials der Formel (2) auf (jeweils bezogen auf das Gesamtgewicht der entsprechenden Schicht des Füllmaterials).

Erfindungsgemäß kann auch vorgesehen sein, dass das mindestens eine stöchiometrische Material der Formel (1) und/oder das mindestens eine nicht-stöchiometrische Materials der Formel (2) auf einem Trägermaterial aufgebracht ist. Besonders bevorzugt ist das mindestens eine stöchiometrische Material der Formel (1) und/oder das mindestens eine nicht-stöchiometrische Materials der Formel (2) auf einem Trägermaterial ausgewählt aus der Gruppe bestehend aus SiO₂, TiO₂, Al₂O₃ und ZrO₂ aufgebracht. Dabei nimmt das Trägermaterial erfindungsgemäß nicht an der im dem Reaktorsystem durchgeführten chemischen Reaktion teil.

Besonders bevorzugt bestehen die Schichten A, B, und/oder C, bevorzugt alle Schichten, des Füllmaterials aus dem mindestens einen stöchiometrischen Material der Formel (1) beziehungsweise aus dem mindestens einen nicht-stöchiometrischen Material der Formel (2).

Gemäß einer besonders bevorzugten Ausführungsform der vorliegenden Erfindung handelt es sich bei dem mindestens einen stöchiometrischen Material der allgemeinen Formel (1) und bei dem mindestens einen nicht-stöchiometrischen Material der allgemeinen Formel (2) jeweils um ein Sauerstoffspeichermaterial (OSM). Bevorzugt ist X des mindestens einen stöchiometrischen Materials der allgemeinen Formel (1) und des mindestens einen nicht-stöchiometrischen Material der allgemeinen Formel (2) unabhängig voneinander ausgewählt aus der Gruppe bestehend aus Sauerstoff (O), Kohlenstoff (C) und Oxycarbid (C_{y1}O_{y2}) mit (y1+y2) = y.

Besonders bevorzugt ist X des mindestens einen stöchiometrischen Materials der allgemeinen Formel (1) und des mindestens einen nicht-stöchiometrischen Material der allgemeinen Formel (2) jeweils Sauerstoff (O). Gemäß dieser bevorzugten Ausführungsform handelt es sich bei dem mindestens einen stöchiometrischen Material der Formel (1) und bei dem mindestens einen nicht-stöchiometrischen Material der Formel (2) jeweils um ein Sauerstoffspeichermaterial (OSM), insbesondere jeweils um ein Oxid.

Gemäß einer bevorzugten Ausführungsform ist das mindestens eine nicht-stöchiometrische Material der Formel (2) der zweiten Schicht B und/oder das mindestens eine nicht-stöchiometrische Material der Formel (2) der dritten Schicht C jeweils unabhängig voneinander ausgewählt aus:
i) Oxiden der Fluoritstruktur MO_{2(1-z)}, bevorzugt mit M = Ce oder M = AₙB₁₋ₙ mit A = Ce und B = ein metallisches Element, und
ii) Perovskiten der Struktur ABO_{3(1-z)}, wobei A und/oder B die Form A1₁₋ₘA2ₘ und/oder B1₁₋ₚB2ₚ annehmen können und gilt: 0 < m < 1 und 0 < p < 1, und wobei A, A1, A2, B, B1 und B2 jeweils unabhängig voneinander ausgewählt sind aus der Gruppe bestehend aus La, Sr, Fe, Mn, Co, Fe.

In einer bevorzugten Ausführungsform der vorliegenden Erfindung ist das mindestens eine nicht-stöchiometrische Material der Formel (2) der zweiten Schicht B und/oder das mindestens eine nicht-stöchiometrische Material der Formel (2) der dritten Schicht C jeweils unabhängig voneinander ein Oxid der Fluoritstruktur MO_{2(1-z)} ausgewählt aus der Gruppe bestehend aus (Bi₂O₃)_{0.73}(CaO)_{0.27}, (Bi₂O₃)_{0.75}(Er₂O₃)_{0.25}, (Bi₂O₃)_{0.6}(Tb₂O_{3.5})_{0.4}, (Bi₂O₃)_{0.75}(Y₂O₃)_{0.25}, Bi_{1.25}Y_{0.5}Cu_{0.25}O₃, Bi_{0.5}Cu_{0.5}O₃, Bi_{0.75}Y_{0.5}Cu_{0.75}O₃, Bi_{1.5}Y_{0.3}Sm_{0.2}O₃, Bi_{2.02}Co_{0.13}V_{0.85}O_{z}, Ce_{0.8}Pr_{0.2}O_{2-δ}, Gd_{0.15}Ce_{0.65}Pr_{0.2}O_{2-δ}, Gd_{0.2}Ce_{0.6}Pr_{0.2}O_{2-δ}, (ZrO₂)_{0.85}(CaO)_{0.15}, (ZrO₂)_{0.84}(CaO)_{0.16}, [(ZrO₂)_{0.9}(CeO₂)_{0.1}]_{0.9}(CaO)_{0.1}, [(ZrO₂)_{0.8}(CeO₂)_{0.2}]_{0.9}(CaO)_{0.1}, [(ZrO₂)_{0.7}(CeO₂)_{0.3}]_{0.9}(CaO)_{0.1}, [(ZrO₂)_{0.6}(CeO₂)_{0.4}]_{0.9}(CaO)_{0.1}, (ZrO₂)_{0.7}(Tb₂O_{3.5})_{0.3}; (ZrO₂)_{0.7}(Tb₂O_{3.5})_{0.25}(Y₂O₃)_{0.05}, (ZrO₂)_{0.7}(Tb₂O_{3.5})_{0.228}(Y₂O₃)_{0.072}, (ZrO₂)_{0.8}(Y₂O₃)_{0.20}; [(ZrO₂)_{0.89}(Y₂O₃)_{0.11}]_{0.96}(CeO₂)_{0.04}; [(ZrO₂)_{0.89}(Y₂O₃)_{0.11}]_{0.87}(CeO₂)_{0.13} und [(ZrO₂)_{0.89}(Y₂O₃)_{0.11}]_{0.77}(CeO₂)_{0.2}CeO₂, oder ein Perovskit der Struktur ABO_{3(1-z)} ausgewählt aus der Gruppe bestehend aus BaBi_{0.5}Co_{0.2}Fe_{0.3}O_{3-δ}, BaBi_{0.4}Co_{0.2}Fe_{0.4}O_{3-δ}, BaBi_{0.2}Co_{0.2}Fe_{0.6}O_{3-δ}, BaCe_{0.4}Fe_{0.6}O_{3-δ}, BaCe_{0.2}Fe_{0.8}O_{3-δ}, BaCe_{0.15}Fe_{0.85}O_{3-δ}, BaCo_{0.4}Fe_{0.5}Zr_{0.1}O_{3-δ}, Ba_{0.5}Sr_{0.5}Co_{0.8}Fe_{0.2}O_{3-δ}, Ba_{0.5}Sr_{0.5}Zn_{0.2}Fe_{0.8}O_{3-δ}, BaTi_{0.2}Co_{0.4}Fe_{0.4}O_{3-δ}, BaTi_{0.2}Co_{0.5}Fe_{0.3}O_{3-δ}, CaTi_{0.8}Fe_{0.2}O_{3-δ}, Gd_{0.6}Sr_{0.4}CoO_{3-δ}, La_{0.6}Ba_{0.4}Co_{0.8}Fe_{0.2}O_{3-δ}, La_{0.4}Ba_{0.6}CO_{0.2}Fe_{0.8}O_{3-δ}, La_{0.2}Ba_{0.8}Co_{0.2}Fe_{0.8}O_{3-δ}, La_{0.6}Ca_{0.4}Co_{0.8}Fe_{0.2}O_{3-δ}, La_{0.4}Ca_{0.6}Co_{0.2}Fe_{0.8}O_{3-δ}, LaCo_{0.8}Fe_{0.2}O_{3-δ}, LaCo_{0.8}Fe_{0.2}O_{3-δ}, LaCo_{0.4}Fe_{0.6}O_{3-δ}, LaCo_{0.8}Fe_{0.1}Ni_{0.1}O_{3-δ}, LaCo_{0.7}Fe_{0.1}Ni_{0.2}O_{3-δ}, LaCo_{0.6}Fe_{0.2}Ni_{0.2}O_{3-δ}, LaCo_{0.5}Fe_{0.2}Ni_{0.3}O_{3-δ}, LaCo_{0.4}Ga_{0.4}Mg_{0.2}O_{3-δ}, LaCo_{0.6}Ga_{0.3}Mg_{0.1}O_{3-δ}, LaCo_{0.9}Mg_{0.1}O_{3-δ}, LaCo_{0.8}W_{0.2}O_{3-δ}, LaFe_{0.8}Ni_{0.2}O_{3-δ}, LaFe_{0.7}Ni_{0.3}O_{3-δ}, LaFe_{0.6}Ni_{0.4}O_{3-δ}, LaFe_{0.5}Ni_{0.5}O_{3-δ}, LaGa_{0.8}Ni_{0.2}O_{3-δ}, LaGa_{0.7}Ni_{0.3}O_{3-δ}, LaGa_{0.6}Ni_{0.4}O_{3-δ}, LaGa_{0.5}Ni_{0.5}O_{3-δ}, LaGa_{0.4}Ni_{0.6}O_{3-δ}, La_{0.6}Na_{0.4}Co_{0.8}Fe_{0.2}O_{3-δ}, La_{0.6}Sr_{0.4}CoO_{3-δ}, La_{0.6}Sr_{0.4}Co_{0.8}Cr_{0.2}O_{3-δ}, La_{0.6}Sr_{0.4}Co_{0.8}Cu_{0.2}O_{3-δ}, La_{0.6}Sr_{0.4}Co_{0.2}Fe_{0.2}O_{3-δ}, La_{0.6}Sr_{0.4}Co_{0.2}Fe_{0.6}O_{3-δ}, La_{0.6}Sr_{0.4}Co_{0.8}Fe_{0.2}O_{3-δ}, La_{0.6}Sr_{0.4}Co_{0.8}Fe_{0.2}O_{3-δ}, La_{0.4}Sr_{0.6}CO_{0.2}Fe_{0.8}O_{3-δ}, La_{0.2}Sr_{0.8}Co_{0.2}Fe_{0.8}O_{3-δ}, La_{0.2}Sr_{0.4}Co_{0.8}Fe_{0.6}O_{3-δ}, La_{0.6}Sr_{0.4}Co_{0.8}Mn_{0.2}O_{3-δ}, La_{0.6}Sr_{0.4}Co_{0.8}Ni_{0.2}O_{3-δ}, La_{0.9}Sr_{0.1}FeO_{3-δ}, La_{0.8}Sr_{0.2}FeO_{3-δ}; La_{0.7}Sr_{0.3}Fe_{0.3-δ}, La_{0.6}Sr_{0.4}FeO_{3-δ}, La_{0.8}Sr_{0.2}Ga_{0.7}Co_{0.3}O_{3-δ}, La_{0.8}Sr_{0.2}Ga_{0.7}Fe_{0.3}O_{3-δ}, La_{0.8}Sr_{0.2}Ga_{0.7}Ni_{0.3}O_{3-δ}, Nd_{0.6}Sr_{0.4}CoO_{3-δ}, Pr_{0.6}Sr_{0.4}CoO_{3-δ}, Sm_{0.6}Sr_{0.4}CoO_{3-δ}, Sr_{0.5}Bi_{0.5}FeO_{3-δ}, SrCoO_{3-δ}, SrCo_{0.4}Fe_{0.6}O_{3-δ}, SrCo_{0.8}Fe_{0.2}O_{3-δ}, SrCo_{0.8}Fe_{0.2}O_{3-δ}, SrCo_{0.89}Fe_{0.1}Cr_{0.01}O_{3-δ}, SrCo_{0.85}Fe_{0.1}Cr_{0.05}O_{3-δ}, SrCo_{0.95}Ti_{0.05}O_{3-δ}, SrCo_{0.8}Ti_{0.2}O_{3-δ}, Sr_{0.7}Gd_{0.3}CoO_{3-δ}, Sr_{0.7}La_{0.3}CoO_{3-δ}, Sr_{0.65}La_{0.35}CoO_{3-δ}, Sr_{0.6}La_{0.4}CoO_{3-δ}, Sr_{0.55}La_{0.45}CoO_{3-δ}, Sr_{0.65}La_{0.35}CoO_{3-δ}, Sr_{0.7}Nd_{0.3}CoO_{3-δ}, Sr_{0.7}Sm_{0.3}CoO_{3-δ}, Y_{0.85}Ba_{0.95}CoO_{3-δ}, Y_{0.1}Ba_{0.9}CoO_{3-δ} und Y_{0.33}Ba_{0.67}CoO_{3-δ}.

Gemäß einer weiteren bevorzugten Ausführungsform der Erfindung ist das mindestens eine nicht-stöchiometrische Material der Formel (2) der zweiten Schicht B und/oder das mindestens eine nicht-stöchiometrische Material der Formel (2) der dritten Schicht C jeweils unabhängig voneinander ein Lanthan-haltiges Perovskit der Struktur ABO_{3(1-z)} ausgewählt aus der Gruppe bestehend aus La_{0.8}Sr_{0.2}FeO_{3-δ}, La_{0.8}Sr_{0.2}Fe_{0.94}Al_{0.06}O_{3-δ}, La_{0.7}Sr_{0.3}FeO_{3-δ}, La_{0.7}Sr_{0.3}Fe_{0.94}Al_{0.06}O_{3-δ}, La_{0.7}Sr_{0.3}FeO_{3-δ}, La_{0.6}Sr_{0.4}FeO_{3-δ}, La_{0.6}Sr_{0.4}Fe_{0.94}Al_{0.06}O_{3-δ}, La_{0.5}Sr_{0.5}FeO_{3-δ}, und La_{0.6}Sr_{0.4}Co_{0.2}Fe_{0.8}O_{3-δ}.

Besonders bevorzugt ist das mindestens eine nicht-stöchiometrische Material der Formel (2) der zweiten Schicht B und/oder das mindestens eine nicht-stöchiometrische Material der Formel (2) der dritten Schicht C jeweils unabhängig voneinander ausgewählt aus der Gruppe bestehend aus CeO₂ (CeO_{2(1-z)}), Ag/CeO₂ (Ag/CeO_{2(1-z)}), Li/CeO₂ (Li/CeO_{2(1-z)}), Ni/CeO₂ (Ni/CeO_{2(1-z)}), Cu/CeO₂ (Cu/CeO_{2(1-z)}), Mg/CeO₂ (Mg/CeO_{2(1-z)}), TiO₂₋ₓ (TiO_{2(1-z)}), ZrO₂₋ₓ (ZrO_{2(1-z)}), Ce_{0.5}Zr_{0.5}O₂ (Ce_{0.5}Ze_{0.5}O_{2(1-z)}), CeₙZrₘCu₁₋ₙ₋ₘO₂ (CeₙZrₘCu₁₋ₙ₋ₘO_{2(1-z)}) (n = 0.6, 0.7, m = 0-0.35), La_{0.8}Sr_{0.2}FeO_{3-δ}, La_{0.8}Sr_{0.2}Fe_{0.94}Al_{0.06}O_{3-δ}, La_{0.7}Sr_{0.3}FeO_{3-δ}, La_{0.7}Sr_{0.3}Fe_{0.94}Al_{0.06}O_{3-δ}, La_{0.7}Sr_{0.3}FeO_{3-δ}, La_{0.6}Sr_{0.4}FeO_{3-δ}, La_{0.6}Sr_{0.4}Fe_{0.94}Al_{0.06}O_{3-δ}, La_{0.5}Sr_{0.5}FeO_{3-δ}, und La_{0.6}Sr_{0.4}Co_{0.2}Fe_{0.8}O_{3-δ}.

In einer bevorzugten Ausführungsform der Erfindung handelt es sich bei dem mindestens einen stöchiometrischen Material der Formel (1) um ein Oxid mit i) M = Fe oder ii) M = AₙB₁₋ₙ, wobei gilt: A = Fe und B = ein metallisches Element.

Gemäß einer weiteren bevorzugten Ausführungsform der vorliegenden Erfindung handelt es sich bei X des mindestens einen stöchiometrischen Materials der allgemeinen Formel (1) und des mindestens einen nicht-stöchiometrischen Materials der allgemeinen Formel (2) um Stickstoff (N). Gemäß dieser bevorzugten Ausführungsform handelt es sich bei dem mindestens einen stöchiometrischen Material der Formel (1) und bei dem mindestens einen nicht-stöchiometrischen Material der Formel (2) demnach jeweils um ein Stickstoffspeichermaterial, insbesondere jeweils um ein Nitrid.

Gemäß einer bevorzugten Ausführungsform ist das mindestens eine nicht-stöchiometrische Material der Formel (2) der zweiten Schicht B und/oder das mindestens eine nicht-stöchiometrische Material der Formel (2) der dritten Schicht C jeweils unabhängig voneinander ausgewählt aus:
i) Perovskiten der Struktur ABN_{3(1-z)}, wobei A und/oder B die Form A1₁₋ₘA2ₘ und/oder B1₁₋ₚB2ₚ annehmen können und gilt: 0 < m < 1 und 0 < p < 1, und wobei A, A1, A2, B, B1 und B2 jeweils unabhängig voneinander ausgewählt sind aus der Gruppe bestehend aus Y, Nb, Mo, In, La, Ce, Gd, Ta, W.
ii) Anti-Perovskite der Struktur A_{3(1-z)}BN oder A₃BN_{5(1-z)}

Besonders bevorzugt ist das mindestens eine nicht-stöchiometrische Material der Formel (2) der zweiten Schicht B und/oder das mindestens eine nicht-stöchiometrische Material der Formel (2) der dritten Schicht C jeweils unabhängig voneinander ausgewählt aus der Gruppe bestehend aus CeNbN_{3-δ}, CeTaN_{3-δ}, CeMoN_{3-δ}, CeWN_{3-δ}, LaMoN_{3-δ}, LaWN_{3-δ}, YMoN_{3-δ}, YWN_{3-δ}, GdWN_{3-δ}, InMoN_{3-δ}, Co₃ZnN, Ni₃ZnN, Co₃InN, Ni₃InN.

In einer bevorzugten Ausführungsform der Erfindung handelt es sich bei dem mindestens einen stöchiometrischen Material der Formel (1) um ein Metallnitrid oder ein Metallimid, bevorzugt mit M = Fe, Ni, Cr, Mn, Mo, Ta, Re, Ti, Mg, W, V, Ga, Li, Na, K, Mg, Ca, Ba.

In einer bevorzugten Ausführungsform der vorliegenden Erfindung handelt es sich bei X des mindestens einen stöchiometrischen Materials der allgemeinen Formel (1) und des mindestens einen nicht-stöchiometrischen Materials der allgemeinen Formel (2) um Kohlenstoff (C) oder (C_{y1}O_{y2}) mit (y1+y2) = y. Gemäß dieser bevorzugten Ausführungsform handelt es sich bei dem mindestens einen stöchiometrischen Material der Formel (1) und bei dem mindestens einen nicht-stöchiometrischen Material der Formel (2) demnach jeweils um ein Sauerstoffspeichermaterial (OSM), insbesondere jeweils um ein Carbid, bevorzugt um ein Oxy-Carbid.

Bevorzugt ist das mindestens eine nicht-stöchiometrische Material der Formel (2) der zweiten Schicht B und/oder das mindestens eine nicht-stöchiometrische Material der Formel (2) der dritten Schicht C jeweils ein Übergangsmetall(oxy)carbid, insbesondere ein Molybdän(oxy)carbid, besonders bevorzugt ein Ni-(α-MoC)/Al₂O₃ Katalysator.

In einer weiteren bevorzugten Ausführungsform der vorliegenden Erfindung handelt es sich bei X des mindestens einen stöchiometrischen Materials der allgemeinen Formel (1) und des mindestens einen nicht-stöchiometrischen Materials der allgemeinen Formel (2) um Schwefel (S). Gemäß dieser bevorzugten Ausführungsform handelt es sich bei dem mindestens einen stöchiometrischen Material der Formel (1) und bei dem mindestens einen nicht-stöchiometrischen Material der Formel (2) demnach jeweils um ein Schwefelspeichermaterial, insbesondere jeweils um ein Sulfid.

Bevorzugt ist das mindestens eine nicht-stöchiometrische Material der Formel (2) der zweiten Schicht B und/oder das mindestens eine nicht-stöchiometrische Material der Formel (2) der dritten Schicht C jeweils ein Eisensulfid, insbesondere Fe₍₁₋ₖ₎S, mit 0,1 < k < 0,9.

Erfindungsgemäß kann auch vorgesehen sein, dass es sich bei X des mindestens einen stöchiometrischen Materials der allgemeinen Formel (1) und des mindestens einen nicht-stöchiometrischen Materials der allgemeinen Formel (2) um Wasserstoff (H) handelt. Gemäß dieser bevorzugten Ausführungsform handelt es sich bei dem mindestens einen stöchiometrischen Material der Formel (1) und bei dem mindestens einen nicht-stöchiometrischen Material der Formel (2) demnach jeweils um ein Wasserstoffspeichermaterial, insbesondere jeweils um ein Metallhydrid, bevorzugt um ein Edelmetallhydrid.

Bevorzugt ist das mindestens eine nicht-stöchiometrische Material der Formel (2) der zweiten Schicht B und/oder das mindestens eine nicht-stöchiometrische Material der Formel (2) der dritten Schicht C jeweils ein Palladiumhydrid, insbesondere PdHₗ, mit 0,02 < l < 0,58.

Gemäß einer bevorzugten Ausführungsform der vorliegenden Erfindung erlaubt das Reaktorsystem eine separate Temperierung der mindestens zwei unterschiedlichen Schichten des Füllmaterials. In besonders bevorzugter Ausführungsform erlaubt das Reaktorsystem eine separate Temperierung der mindestens zwei unterschiedlichen Schichten des Füllmaterials, wobei der Temperaturunterschied in den mindestens zwei unterschiedlichen Schichten des Füllmaterials zwischen dem mindestens einen Reaktoreingang und dem mindestens einen Reaktorausgang des Reaktorsystems mindestens 20 K, bevorzugt mindestens 30 K, bevorzugt mindestens 40 K, bevorzugt mindestens 50 K, bevorzugt mindestens 60 K, bevorzugt mindestens 70 K, bevorzugt mindestens 80 K, bevorzugt mindestens 90 K, bevorzugt mindestens 100 K, beträgt.

Die vorliegende Erfindung betrifft ferner ein Verfahren zur Durchführung einer chemischen Reaktion im Gegenstromprinzip, umfassend die Schritte:
a) Bereitstellung eines erfindungsgemäßen Reaktorsystems,
b) Einleiten einer ersten chemischen Spezies in das Reaktorsystem am Reaktoreingang, sodass die erste chemische Spezies die mindestens zwei Schichten des Füllmaterials auf dem Weg vom Reaktoreingang zum Reaktorausgang durchströmt, und,
c) Einleiten einer zweiten chemischen Spezies in das Reaktorsystem am Reaktorausgang, sodass die zweite chemische Spezies die mindestens zwei Schichten des Füllmaterials auf dem Weg vom Reaktorausgang zum Reaktoreingang durchströmt,
wobei in Schritt b) am Reaktorausgang mindestens eine modifizierte erste chemische Spezies erhalten wird und/oder wobei in Schritt c) am Reaktoreingang mindestens eine modifizierte zweite chemische Spezies erhalten wird.

Mit dem erfindungsgemäßen Verfahren ist es vorteilhafterweise möglich, eine effiziente Umsetzung einer ersten chemischen Spezies und einer zweiten chemischen Spezies zu mindestens einer modifizierten Spezies, bevorzugt zu einer modifizierten ersten Spezies und einer modifizierten zweiten Spezies zu erreichen. Die aufeinander folgende Einleitung der ersten und der zweiten chemischen Spezies in das Reaktorsystem führt dazu, dass die beiden Teilreaktionen einer Redox-Reaktion zwischen der ersten und zweiten chemischen Spezies entkoppelt werden und nacheinander in den Schritten b) und c) des erfindungsgemäßen Verfahrens ablaufen. Dabei führt das Einleiten einer ersten chemischen Spezies in ein erfindungsgemäßes Reaktorsystem am Reaktoreingang gemäß Schritt b) dazu, dass die erste chemische Spezies die mindestens zwei Schichten des Füllmaterials auf dem Weg vom Reaktoreingang zum Reaktorausgang des Reaktorsystems durchströmt und durch Reaktion mit dem mindestens einen stöchiometrischen Material der Formel (1) und dem mindestens einen nicht-stöchiometrischen Material der Formel (2) oxidiert oder reduziert wird. Nachdem die erste chemische Spezies das Reaktorbett durchströmt hat, wird am Reaktorausgang des Reaktorsystems eine modifizierte, insbesondere oxidierte oder reduzierte, erste chemische Spezies erhalten. Anschließend erfolgt gemäß Schritt c) das Einleiten einer zweiten chemischen Spezies in das erfindungsgemäße Reaktorsystem am Reaktorausgang, sodass die zweite chemische Spezies die mindestens zwei Schichten des Füllmaterials auf dem Weg vom Reaktorausgang zum Reaktoreingang des Reaktorsystems in umgekehrter Flussrichtung durchströmt. Dabei reagiert die zweite chemische Spezies mit dem von der ersten chemischen Spezies in Schritt b) oxidierten oder reduzierten mindestens einen stöchiometrischen Material der Formel (1) und mindestens einen nicht-stöchiometrischen Material der Formel (2), sodass die zweite chemische Spezies selbst reduziert oder oxidiert wird. Nachdem die zweite chemische Spezies das Reaktorbett in entgegengesetzter Flussrichtung durchströmt hat wird am Reaktoreingang des Reaktorsystems eine modifizierte, insbesondere oxidierte oder reduzierte, zweite chemisches Spezies erhalten. Gemäß der vorliegenden Erfindung umfasst das Füllmaterial des Festbett-Reaktors zwischen dem Reaktoreingang und dem Reaktorausgang des Reaktorsystems mindestens zwei unterschiedliche Schichten, wobei eine erste Schicht A mindestens ein stöchiometrisches Material der Formel (1) und eine zweite Schicht B mindestens ein nicht-stöchiometrisches Material der Formel (2) aufweist. Das nicht-stöchiometrische Material der Formel (2) führt vorteilhafterweise dazu, dass es im Füllmaterial entlang des Reaktorbettes zwischen dem mindestens einen Reaktoreingang und dem mindestens einen Reaktorausgang des Reaktorsystems zur Ausbildung eines Gradienten in Bezug auf die Oxidationsstufe des nicht-stöchiometrischen Materials kommen kann, sodass das chemische Potential für die jeweilige Halbreaktion der Redox-Reaktion am entsprechenden Reaktorende optimal ist. Die zusätzliche, mindestens ein stöchiometrisches Material der Formel (1) umfassende Schicht weist vorteilhafterweise eine gegenüber dem nicht-stöchiometrisches Material der Formel (2) erhöhte Kapazität zur Aufnahme/Bindung von Sauerstoff, Stickstoff, Kohlenstoff, Schwefel oder Wasserstoff auf und erlaubt somit eine signifikante Reduzierung des notwendigen Reaktorvolumens unter Beibehaltung eines hohen Reaktionsumsatzes und führt dadurch zu einer deutlich gesteigerten Produktivität in Bezug auf das gewünschte Reaktionsprodukt, insbesondere in Bezug auf die modifizierte erster chemische Spezies und/oder die modifizierte zweite chemischer Spezies, pro Gewichtseinheit an verwendetem Füllmaterial.

Gemäß einer bevorzugten Ausführungsform der vorliegenden Erfindung beträgt der Druckunterschied am jeweiligen Reaktorende des Reaktorsystems zwischen den Schritten b) und c) höchstens 50 kPa, bevorzugt höchstens 100 kPa, bevorzugt höchstens 150 kPa, bevorzugt höchstens 200 kPa, bevorzugt höchstens 250 kPa, bevorzugt höchstens 300 kPa, bevorzugt höchstens 350 kPa, bevorzugt höchstens 400 kPa, bevorzugt höchstens 450 kPa, bevorzugt höchstens 500 kPa. Besonders bevorzugt wird der Druckunterschied zwischen den Schritten b) und c) durch eine geeignete Wahl der Formkörpergeometrie der Partikel des mindestens einen stöchiometrischen Materials der Formel (1) und des mindestens einen nicht-stöchiometrischen Materials der Formel (2) bestimmt, bevorzugt gering gehalten.

In einer bevorzugten Ausführungsform der vorliegenden Erfindung erfolgen die Schritte b) und c) des Verfahrens bei einem Druck von mindestens 0,01 MPa (0,1 bar), bevorzugt mindestens 0,025 MPa (0,25 bar), bevorzugt mindestens 0,05 MPa (0,5 bar), bevorzugt mindestens 0,075 MPa (0,75 bar), bevorzugt mindestens 0,1 MPa (1 bar), bevorzugt mindestens 0,15 MPa (1,5 bar), bevorzugt mindestens 0,2 MPa (2 bar), bevorzugt mindestens 0,25 MPa (2,5 bar), bevorzugt mindestens 0,3 MPa (3 bar), bevorzugt mindestens 0,35 MPa (3,5 bar), bevorzugt mindestens 0,4 MPa (4 bar), bevorzugt mindestens 0,45 MPa (4,5 bar), bevorzugt mindestens 0,5 MPa (5 bar), bevorzugt mindestens 0,55 MPa (5,5 bar), bevorzugt mindestens 0,6 MPa (6 bar), bevorzugt mindestens 0,65 MPa (6,5 bar), bevorzugt mindestens 0,7 MPa (7 bar), bevorzugt mindestens 0,75 MPa (7,5 bar).

Gemäß einer bevorzugten Ausführungsform der vorliegenden Erfindung erfolgen die Schritte b) und c) des Verfahrens bei einem Druck von höchstens 5 MPa (50 bar), bevorzugt höchstens 0,45 MPa (45 bar), bevorzugt höchstens 4 MPa (40 bar), bevorzugt höchstens 3,5 MPa (35 bar), bevorzugt höchstens 3 MPa (30 bar), bevorzugt höchstens 2,5 MPa (25 bar), bevorzugt höchstens 2 MPa (20 bar), bevorzugt höchstens 1,5 MPa (15 bar), bevorzugt höchstens 1 MPa (10 bar), bevorzugt höchstens 0,5 MPa (5 bar), bevorzugt höchstens 0,4 MPa (4 bar), bevorzugt höchstens 0,3 MPa (3 bar), bevorzugt höchstens 0,2 MPa (2 bar), bevorzugt höchstens 0,1 MPa (1 bar).

In einer besonders bevorzugten Ausführungsform der vorliegenden Erfindung erfolgen die Schritte b) und c) des Verfahrens bei einem Druck von 0,1 bis 3 MPa (1 bis 30 bar), bevorzugt 0,5 bis 2,5 MPa (5 bis 25 bar), bevorzugt 0,75 bis 2 MPa (7,5 bis 20 bar).

In einer bevorzugten Ausführungsform der vorliegenden Erfindung wird die Abfolge der Schritte b) und c) des Verfahrens mindestens einmal wiederholt. Bei Wiederholung der Schritte b) und c) wird dabei die erste chemische Spezies erneut am Reaktoreingang in das Reaktorsystem eingeleitet und die zweite chemische Spezies erneut am Reaktorausgang in das Reaktorsystem eingeleitet.

Gemäß einer bevorzugten Ausführungsform der vorliegenden Erfindung werden die Schritte b) und c) mindestens zwei Mal, bevorzugt mindestens fünf Mal, bevorzugt mindestens 10 Mal, bevorzugt mindestens 15 Mal, bevorzugt mindestens 20 Mal, bevorzugt mindestens 25 Mal, bevorzugt mindestens 50 Mal, bevorzugt mindestens 100 Mal, bevorzugt mindestens 150 Mal, bevorzugt mindestens 200 Mal, bevorzugt mindestens 250 Mal, bevorzugt mindestens 500 Mal, bevorzugt mindestens 750 Mal, bevorzugt mindestens 1000 Mal, bevorzugt mindestens 1500 Mal, bevorzugt mindestens 1750 Mal, bevorzugt mindestens 2000 Mal, bevorzugt mindestens 2500 Mal, bevorzugt mindestens 5000 Mal, bevorzugt mindestens 7500 Mal, bevorzugt mindestens 10000 Mal, wiederholt.

In einer weiteren bevorzugten Ausführungsform der vorliegenden Erfindung werden die Schritte b) und c) unter Flussrichtungsumkehr mindestens einmal wiederholt, sodass die erste chemische Spezies bei Wiederholung der Schritte b) und c) in einem Schritt b1) am Reaktorausgang in das Reaktorsystem eingeleitet wird und die zweite chemische Spezies bei Wiederholung der Schritte b) und c) in einem Schritt c1) am Reaktoreingang in das Reaktorsystem eingeleitet wird und wobei die Schritte b)/c) und b1)/c1) alternierend nacheinander durchgeführt werden.

In einer bevorzugten Ausführungsform der vorliegenden Erfindung erfolgt nach Schritt b) und vor Schritt c) und/oder nach Schritt c) eine Spülung des Reaktorbettes durch eine dritte chemische Spezies, insbesondere durch ein drittes Gas.

Erfindungsgemäß kann somit vorgesehen sein, dass nach Schritt b) und vor Schritt c) eine dritte chemische Spezies in den Reaktoreingang oder Reaktorausgang des Reaktorsystems eingeleitet wird und die mindestens zwei Schichten des Füllmaterials auf dem Weg vom Reaktoreingang zum Reaktorausgang oder umgekehrt durchströmt. Gemäß dieser bevorzugten Ausführungsform der vorliegenden Erfindung erfolgt nach Schritt b) und vor Schritt c) eine Spülung des Reaktorbettes durch eine dritte chemische Spezies, insbesondere durch ein drittes Gas.

Alternativ oder zusätzlich kann erfindungsgemäß auch vorgesehen sein, dass nach Schritt c) eine dritte chemische Spezies in den Reaktorausgang oder Reaktoreingang des Reaktorsystems eingeleitet wird und die mindestens zwei Schichten des Füllmaterials auf dem Weg vom Reaktorausgang zum Reaktoreingang oder umgekehrt durchströmt. Gemäß dieser bevorzugten Ausführungsform der vorliegenden Erfindung erfolgt demnach im Anschluss an Schritt c) eine Spülung des Reaktorbettes durch eine dritte chemische Spezies, insbesondere durch ein drittes Gas.

Bevorzugt ist die dritte chemische Spezies, insbesondere das dritte Gas, ausgewählt aus der Gruppe bestehend aus N₂, CO₂, Ar, He, oder Mischungen davon. Besonders bevorzugt ist die dritte chemische Spezies, insbesondere das dritte Gas, ein Inertgas, insbesondere ein Edelgas, bevorzugt Ar und/oder He.

In einer besonders bevorzugten Ausführungsform handelt es sich bei dem erfindungsgemäßen Verfahren um ein Verfahren zur Herstellung von CO oder Synthesegas, insbesondere von Synthesegas, durch Chemical Looping im Gegenstromprinzip, wobei es sich bei dem in Schritt a) bereitgestellten Reaktorsystem um einen erfindungsgemäßes Reaktorsystem handelt, das sich insbesondere dadurch auszeichnet, dass es sich bei dem mindestens einen stöchiometrischen Material der Formel (1) und dem mindestens einen nicht-stöchiometrischen Material der Formel (2) des Füllmaterials jeweils um ein Sauerstoffspeichermaterial (OSM), insbesondere jeweils um ein Oxid, handelt.

In einer ersten bevorzugten Ausführungsform dieses Verfahrens zur Herstellung von CO oder Synthesegas, insbesondere von Synthesegas, durch Chemical Looping im Gegenstromprinzip kann vorgesehen sein, dass die erste chemische Spezies CO₂ und die zweite chemische Spezies H₂ ist. In einem solchen Fall handelt es sich bei dem erfindungsgemäßen Verfahren, insbesondere bei dem Verfahren zur Herstellung von CO oder Synthesegas, insbesondere von Synthesegas, durch Chemical Looping im Gegenstromprinzip, um ein Verfahren zur Herstellung von CO oder Synthesegas, insbesondere von Synthesegas, im RWGS-Verfahren durch Chemical Looping im Gegenstromprinzip. Als erste und zweite modifizierte chemische Spezies werden Kohlenstoffmonooxid (CO) und H₂O erhalten.

Demnach betrifft ein Aspekt der vorliegenden Erfindung ein Verfahren zur Herstellung von CO oder Synthesegas, insbesondere von Synthesegas, im RWGS-Verfahren durch Chemical Looping im Gegenstromprinzip, umfassend die Schritte:
a1) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓO_{y}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und y jeweils ganze Zahlen sind, die für eine stöchiometrische Bindung zwischen M und O erforderlich sind,
   wobei die Aufnahme/Abgabe von O bei der zur Durchführung der chemischen Reaktion verwendeten Temperatur eine bis höchstens vier Phasenumwandlungen in dem mindestens einen stöchiometrischen Material hervorruft,
   und wobei eine zweite Schicht B mindestens ein nicht-stöchiometrisches Material der Formel (2):

      MₓO_{y(1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und y jeweils ganze Zahlen sind, die für eine stöchiometrische Bindung zwischen Mund O erforderlich sind, wobei gilt: 0 < z < 1 und 0 > z > -1, und wobei das Material in der Lage ist eine Reihe an Werten für z anzunehmen,
b1) Einleiten von CO₂ in das Reaktorsystem am Reaktoreingang, sodass CO₂ die mindestens zwei Schichten des Füllmaterials auf dem Weg vom Reaktoreingang zum Reaktorausgang durchströmt und am Reaktorausgang CO erhalten wird,
c1) Einleiten von H₂ in das Reaktorsystem am Reaktorausgang, sodass H₂ die mindestens zwei Schichten des Füllmaterials auf dem Weg vom Reaktorausgang zum Reaktoreingang durchströmt und am Reaktoreingang H₂O erhalten wird.

In einer bevorzugten Ausführungsform der vorliegenden Erfindung beträgt das Verhältnis von nicht-stöchiometrischen Material zu stöchiometrischem Material in dem Füllmaterial des in Schritt a1) bereitgestellten Reaktorsystem mindestens 2, bevorzugt mindestens 5, bevorzugt mindestens 8, bevorzugt mindestens 10.

Gemäß einer bevorzugten Ausführungsform des Verfahrens zur Herstellung von Synthesegas im RWGS-Verfahren durch Chemical Looping im Gegenstromprinzip beträgt die CO-Produktivität pro Zyklus mindestens 6 ml/g, bevorzugt mindestens 7 ml/g, bevorzugt mindestens 8 ml/g, bevorzugt mindestens 9 ml/g, bevorzugt mindestens 10 ml/g, bevorzugt mindestens 15 ml/g, bevorzugt mindestens 20 ml/g, bevorzugt mindestens 25 ml/g, bevorzugt mindestens 30 ml/g, bevorzugt mindestens 35 ml/g, bevorzugt mindestens 40 ml/g, bevorzugt mindestens 45 ml/g, bevorzugt mindestens 50 ml/g, jeweils bezogen auf das Gesamtgewicht des Füllmaterials.

In einer bevorzugten Ausführungsform des Verfahrens zur Herstellung von CO oder Synthesegas, insbesondere von Synthesegas, im RWGS-Verfahren durch Chemical Looping im Gegenstromprinzip beträgt die CO-Ausbeute mindestens 90%, bevorzugt mindestens 92%, bevorzugt mindestens 94%, bevorzugt mindestens 96%, bevorzugt mindestens 98% (jeweils molarer Anteil von CO im Produktstrom des CO₂-Konvertierungszyklus).

In einer zweiten bevorzugten Ausführungsform dieses Verfahrens zur Herstellung von CO oder Synthesegas, insbesondere von Synthesegas, durch Chemical Looping im Gegenstromprinzip kann vorgesehen sein, dass die erste chemische Spezies CO₂ und die zweite chemische Spezies Methan (CH₄) ist. In einem solchen Fall handelt es sich bei dem erfindungsgemäßen Verfahren, insbesondere bei dem Verfahren zur Herstellung von CO oder Synthesegas, insbesondere von Synthesegas, durch Chemical Looping im Gegenstromprinzip, um ein Verfahren zur Herstellung von CO oder Synthesegas, insbesondere von Synthesegas, durch Trockenreformierung mittels Chemical Looping im Gegenstromprinzip. Als erste und zweite modifizierte chemische Spezies werden aus dem Verfahren CO und H₂ erhalten.

Gemäß einem weiteren Aspekt betrifft der vorliegenden Erfindung somit ein Verfahren zur Herstellung von CO oder Synthesegas, insbesondere von Synthesegas, durch Trockenreformierung mittels Chemical Looping im Gegenstromprinzip, umfassend die Schritte:
a2) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓO_{y}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und y jeweils ganze Zahlen sind, die für eine stöchiometrische Bindung zwischen M und O erforderlich sind,
   wobei die Aufnahme/Abgabe von O bei der zur Durchführung der chemischen Reaktion verwendeten Temperatur eine bis höchstens vier Phasenumwandlungen in dem mindestens einen stöchiometrischen Material hervorruft,
   und wobei eine zweite Schicht B mindestens ein nicht-stöchiometrisches Material der Formel (2):

      MₓO_{y(1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und y jeweils ganze Zahlen sind, die für eine stöchiometrische Bindung zwischen Mund O erforderlich sind, wobei gilt: 0 < z < 1 und 0 > z > -1, und wobei das Material in der Lage ist eine Reihe an Werten für z anzunehmen,
b2) Einleiten von CO₂ in das Reaktorsystem am Reaktoreingang, sodass CO₂ die mindestens zwei Schichten des Füllmaterials auf dem Weg vom Reaktoreingang zum Reaktorausgang durchströmt und am Reaktorausgang CO erhalten wird,
c2) Einleiten von CH₄ in das Reaktorsystem am Reaktorausgang, sodass CH₄ die mindestens zwei Schichten des Füllmaterials auf dem Weg vom Reaktorausgang zum Reaktoreingang durchströmt und am Reaktoreingang CO und H₂ erhalten werden.

Gemäß einer dritten bevorzugten Ausführungsform dieses Verfahrens zur Herstellung von CO oder Synthesegas, insbesondere von Synthesegas, durch Chemical Looping im Gegenstromprinzip kann vorgesehen sein, dass die erste chemische Spezies H₂O und die zweite chemische Spezies CH₄ ist. In einem solchen Fall handelt es sich bei dem erfindungsgemäßen Verfahren, insbesondere bei dem Verfahren zur Herstellung von CO oder Synthesegas, insbesondere von Synthesegas, durch Chemical Looping im Gegenstromprinzip, um ein Verfahren zur Herstellung von CO oder Synthesegas, insbesondere von Synthesegas, durch Dampfreformierung mittels Chemical Looping im Gegenstromprinzip. Als erste und zweite modifizierte chemische Spezies werden aus dem Verfahren CO und H₂ erhalten.

Ein Aspekt der vorliegenden Erfindung ist demnach auf ein Verfahren zur Herstellung von CO oder Synthesegas, insbesondere von Synthesegas, durch Dampfreformierung mittels Chemical Looping im Gegenstromprinzip gerichtet, umfassend die Schritte:
a3) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓO_{y}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und y jeweils ganze Zahlen sind, die für eine stöchiometrische Bindung zwischen M und O erforderlich sind,
   wobei die Aufnahme/Abgabe von O bei der zur Durchführung der chemischen Reaktion verwendeten Temperatur eine bis höchstens vier Phasenumwandlungen in dem mindestens einen stöchiometrischen Material hervorruft,
   und wobei eine zweite Schicht B mindestens ein nicht-stöchiometrisches Material der Formel (2):

      MₓO_{y(1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und y jeweils ganze Zahlen sind, die für eine stöchiometrische Bindung zwischen Mund O erforderlich sind, wobei gilt: 0 < z < 1 und 0 > z > -1, und wobei das Material in der Lage ist eine Reihe an Werten für z anzunehmen,
b3) Einleiten von H₂O_{(g)} in das Reaktorsystem am Reaktoreingang, sodass H₂O_{(g)} die mindestens zwei Schichten des Füllmaterials auf dem Weg vom Reaktoreingang zum Reaktorausgang durchströmt und am Reaktorausgang H₂ erhalten wird,
c3) Einleiten von CH₄ in das Reaktorsystem am Reaktorausgang, sodass CH₄ die mindestens zwei Schichten des Füllmaterials auf dem Weg vom Reaktorausgang zum Reaktoreingang durchströmt und am Reaktoreingang CO und H₂ erhalten werden.

In einer weiteren bevorzugten Ausführungsform der Erfindung handelt es sich bei dem erfindungsgemäßen Verfahren um ein Verfahren zur Herstellung von CO oder Synthesegas, insbesondere von Synthesegas, durch Chemical Looping im Gegenstromprinzip, wobei es sich bei dem in Schritt a) bereitgestellten Reaktorsystem um ein erfindungsgemäßes Reaktorsystem handelt, das sich insbesondere dadurch auszeichnet, dass es sich bei dem mindestens einen stöchiometrischen Material der Formel (1) und dem mindestens einen nicht-stöchiometrischen Material der Formel (2) des Füllmaterials jeweils um ein Carbid, bevorzugt Oxy-Carbid, handelt.

In einer ersten bevorzugten Ausführungsform dieses Verfahrens zur Herstellung von CO oder Synthesegas, insbesondere von Synthesegas, durch Chemical Looping im Gegenstromprinzip kann vorgesehen sein, dass die erste chemische Spezies CO₂ und die zweite chemische Spezies H₂ ist. In einem solchen Fall handelt es sich bei dem erfindungsgemäßen Verfahren, insbesondere bei dem Verfahren zur Herstellung von CO oder Synthesegas, insbesondere von Synthesegas, durch Chemical Looping im Gegenstromprinzip, um ein Verfahren zur Herstellung von CO oder Synthesegas, insbesondere von Synthesegas, im RWGS-Verfahren durch Chemical Looping im Gegenstromprinzip. Als erste und zweite modifizierte chemische Spezies werden Kohlenstoffmonooxid (CO) und H₂O erhalten.

Folglich betrifft ein Aspekt der vorliegenden Erfindung ein Verfahren zur Herstellung von CO oder Synthesegas, insbesondere von Synthesegas, im RWGS-Verfahren durch Chemical Looping im Gegenstromprinzip, umfassend die Schritte:
a4) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓC_{y1}O_{y2}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und (y1 + y2) jeweils ganze Zahlen sind, die für eine stöchiometrische Bindung zwischen M und C erforderlich sind,
   wobei die Aufnahme/Abgabe von O bei der zur Durchführung der chemischen Reaktion verwendeten Temperatur eine bis höchstens vier Phasenumwandlungen in dem mindestens einen stöchiometrischen Material hervorruft,
   und wobei eine zweite Schicht B mindestens ein nicht-stöchiometrisches Material der Formel (2):

      MₓC_{y1}O_{y2 (1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und (y1 + y2) jeweils ganze Zahlen sind, die für eine stöchiometrische Bindung zwischen M und C erforderlich sind, wobei gilt: 0 < z < 1 und 0 > z > -1, und wobei das Material in der Lage ist eine Reihe an Werten für z anzunehmen,
b4) Einleiten von CO₂ in das Reaktorsystem am Reaktoreingang, sodass CO₂ die mindestens zwei Schichten des Füllmaterials auf dem Weg vom Reaktoreingang zum Reaktorausgang durchströmt und am Reaktorausgang CO erhalten wird,
c4) Einleiten von H₂ in das Reaktorsystem am Reaktorausgang, sodass H₂ die mindestens zwei Schichten des Füllmaterials auf dem Weg vom Reaktorausgang zum Reaktoreingang durchströmt und am Reaktoreingang H₂O erhalten wird.

In einer zweiten bevorzugten Ausführungsform dieses Verfahrens zur Herstellung von CO oder Synthesegas, insbesondere von Synthesegas, durch Chemical Looping im Gegenstromprinzip kann vorgesehen sein, dass die erste chemische Spezies CO₂ und die zweite chemische Spezies Methan (CH₄) ist. In einem solchen Fall handelt es sich bei dem erfindungsgemäßen Verfahren, insbesondere bei dem Verfahren zur Herstellung von CO oder Synthesegas, insbesondere von Synthesegas, durch Chemical Looping im Gegenstromprinzip, um ein Verfahren zur Herstellung von CO oder Synthesegas, insbesondere von Synthesegas, durch Trockenreformierung mittels Chemical Looping im Gegenstromprinzip. Als erste und zweite modifizierte chemische Spezies werden aus dem Verfahren CO und H₂ erhalten.

In einem weiteren Aspekt betrifft der vorliegenden Erfindung somit ein Verfahren zur Herstellung von CO oder Synthesegas, insbesondere von Synthesegas, durch Trockenreformierung mittels Chemical Looping im Gegenstromprinzip, umfassend die Schritte:
a5) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓC_{y1}O_{y2}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und (y1 + y2) jeweils ganze Zahlen sind, die für eine stöchiometrische Bindung zwischen M und C erforderlich sind,
   wobei die Aufnahme/Abgabe von O bei der zur Durchführung der chemischen Reaktion verwendeten Temperatur eine bis höchstens vier Phasenumwandlungen in dem mindestens einen stöchiometrischen Material hervorruft,
   und wobei eine zweite Schicht B mindestens ein nicht-stöchiometrisches Material der Formel (2):

      MₓC_{y1}O_{y2 (1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und (y1 + y2) jeweils ganze Zahlen sind, die für eine stöchiometrische Bindung zwischen M und C erforderlich sind, wobei gilt: 0 < z < 1 und 0 > z > -1, und wobei das Material in der Lage ist eine Reihe an Werten für z anzunehmen,
b5) Einleiten von CO₂ in das Reaktorsystem am Reaktoreingang, sodass CO₂ die mindestens zwei Schichten des Füllmaterials auf dem Weg vom Reaktoreingang zum Reaktorausgang durchströmt und am Reaktorausgang CO erhalten wird,
c5) Einleiten von CH₄ in das Reaktorsystem am Reaktorausgang, sodass CH₄ die mindestens zwei Schichten des Füllmaterials auf dem Weg vom Reaktorausgang zum Reaktoreingang durchströmt und am Reaktoreingang CO und H₂ erhalten werden.

Gemäß einer dritten bevorzugten Ausführungsform dieses Verfahrens zur Herstellung von CO oder Synthesegas, insbesondere von Synthesegas, durch Chemical Looping im Gegenstromprinzip kann vorgesehen sein, dass die erste chemische Spezies H₂O und die zweite chemische Spezies CH₄ist. In einem solchen Fall handelt es sich bei dem erfindungsgemäßen Verfahren, insbesondere bei dem Verfahren zur Herstellung von CO oder Synthesegas, insbesondere von Synthesegas, durch Chemical Looping im Gegenstromprinzip, um ein Verfahren zur Herstellung von CO oder Synthesegas, insbesondere von Synthesegas, durch Dampfreformierung mittels Chemical Looping im Gegenstromprinzip. Als erste und zweite modifizierte chemische Spezies werden aus dem Verfahren CO und H₂ erhalten.

Ein Aspekt der vorliegenden Erfindung ist demnach auf ein Verfahren zur Herstellung von CO oder Synthesegas, insbesondere von Synthesegas, durch Dampfreformierung mittels Chemical Looping im Gegenstromprinzip gerichtet, umfassend die Schritte:
a6) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓC_{y1}O_{y2}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und (y1 + y2) jeweils ganze Zahlen sind, die für eine stöchiometrische Bindung zwischen M und C erforderlich sind,
   wobei die Aufnahme/Abgabe von O bei der zur Durchführung der chemischen Reaktion verwendeten Temperatur eine bis höchstens vier Phasenumwandlungen in dem mindestens einen stöchiometrischen Material hervorruft,
   und wobei eine zweite Schichte B mindestens ein nicht-stöchiometrisches Material der Formel (2):

      MₓC_{y1}O_{y2 (1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und (y1 + y2) jeweils ganze Zahlen sind, die für eine stöchiometrische Bindung zwischen M und C erforderlich sind, wobei gilt: 0 < z < 1 und 0 > z > -1, und wobei das Material in der Lage ist eine Reihe an Werten für z anzunehmen,
b6) Einleiten von H₂O in das Reaktorsystem am Reaktoreingang, sodass H₂O die mindestens zwei Schichten des Füllmaterials auf dem Weg vom Reaktoreingang zum Reaktorausgang durchströmt und am Reaktorausgang H₂ erhalten wird,
c6) Einleiten von CH₄ in das Reaktorsystem am Reaktorausgang, sodass CH₄ die mindestens zwei Schichten des Füllmaterials auf dem Weg vom Reaktorausgang zum Reaktoreingang durchströmt und am Reaktoreingang CO und H₂ erhalten werden.

In einer bevorzugten Ausführungsform der vorliegenden Erfindung kann es sich bei dem Verfahren zur Durchführung einer chemischen Reaktion im Gegenstromprinzip um ein Verfahren zur oxidativen Reduktion von Alkanen mittels Chemical Looping im Gegenstromprinzip handeln. Gemäß dieser Ausführungsform kann vorgesehen sein, dass die erste chemische Spezies ein kurzkettiges Alkan der Formel CₓH₍₂ₓ₊₂₎ ist, bevorzugt ausgewählt auch Ethan, Propan, n-Butan, n-Pentan, und die zweite chemische Spezies O₂ oder CO₂, bevorzugt CO₂, ist. Als erste und zweite modifizierte chemische Spezies werden aus dem Verfahren Alkene, H₂O und CO erhalten.

Ein weiterer Aspekt der vorliegenden Erfindung betrifft demnach ein Verfahren zur oxidativen Reduktion von Alkanen mittels Chemical Looping im Gegenstromprinzip, umfassend die Schritte:
a7) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓO_{y}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und y jeweils ganze Zahlen sind, die für eine stöchiometrische Bindung zwischen M und N erforderlich sind,
   wobei die Aufnahme/Abgabe von O bei der zur Durchführung der chemischen Reaktion verwendeten Temperatur eine bis höchstens vier Phasenumwandlungen in dem mindestens einen stöchiometrischen Material hervorruft,
   und wobei eine zweite Schicht B mindestens ein nicht-stöchiometrisches Material der Formel (2):

      MₓO_{y(1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und y jeweils ganze Zahlen sind, die für eine stöchiometrische Bindung zwischen Mund N erforderlich sind, wobei gilt: 0 < z < 1 und 0 > z > -1, und wobei das Material in der Lage ist eine Reihe an Werten für z anzunehmen,
b7) Einleiten eines Alkans der Formel CₓH₍₂ₓ₊₂₎ in das Reaktorsystem am Reaktoreingang, sodass das Alkan die mindestens zwei Schichten des Füllmaterials auf dem Weg vom Reaktoreingang zum Reaktorausgang durchströmt und am Reaktoreingang ein Alken und H₂O erhalten wird, wobei x eine ganze Zahl ist mit 2 ≤ x ≤ 5 ist,
c7) Einleiten von O₂ oder CO₂ in das Reaktorsystem am Reaktorausgang, sodass O₂ oder CO₂ die mindestens zwei Schichten des Füllmaterials auf dem Weg vom Reaktorausgang zum Reaktoreingang durchströmt und am Reaktoreingang CO erhalten wird.

Darüber hinaus kann auch vorgesehen sein, dass es sich bei dem erfindungsgemäßen Verfahren zur Durchführung einer chemischen Reaktion im Gegenstromprinzip um ein Verfahren zur Herstellung von Ammoniak durch Chemical Looping (Chemical looping ammonia synthesis - CLAS) im Gegenstromprinzip handelt, wobei es sich bei dem in Schritt a) bereitgestellten Reaktorsystem um ein erfindungsgemäßes Reaktorsystem handelt, das sich insbesondere dadurch auszeichnet, dass es sich bei dem mindestens einen stöchiometrischen Material der Formel (1) und dem mindestens einen nicht-stöchiometrischen Material der Formel (2) des Füllmaterial jeweils um ein Stickstoffspeichermaterial handelt, insbesondere jeweils um ein Metallnitrid oder Metallimid.

Gemäß dieser bevorzugten Ausführungsform des erfindungsgemäßen Verfahrens zur Durchführung einer chemischen Reaktion im Gegenstromprinzip kann vorgesehen sein, dass die erste chemische Spezies Stickstoff (N₂) und die zweite chemische Spezies H₂ ist. Als zweite modifizierte chemische Spezies wird in dieser Ausführungsform des erfindungsgemäßen Verfahrens Ammoniak (NH₃) erhalten.

Ein weiterer Aspekt der vorliegenden Erfindung betrifft demnach ein Verfahren zur Herstellung von Ammoniak durch Chemical Looping (Chemical looping ammonia synthesis - CLAS) im Gegenstromprinzip, umfassend die Schritte:
a8) Bereitstellung eines erfindungsgemäßen Reaktorsystems, umfassend:
   i) mindestens einen Festbett-Reaktor,
   ii) mindestens einen Reaktoreingang des Reaktorsystems,
   iii) mindestens einen Reaktorausgang des Reaktorsystems, und
   iv) ein zwischen dem mindestens einen Reaktoreingang und dem mindestens einen Reaktorausgang angeordnetes Füllmaterial,

   dadurch gekennzeichnet, dass das Füllmaterial zwischen dem Reaktoreingang und dem Reaktorausgang mindestens zwei unterschiedliche Schichten aufweist, wobei eine erste Schicht A mindestens ein stöchiometrisches Material der Formel (1):

      MₓN_{y}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, und wobei x und y jeweils ganze Zahlen sind, die für eine stöchiometrische Bindung zwischen M und N erforderlich sind,
   wobei die Aufnahme/Abgabe von N bei der zur Durchführung der chemischen Reaktion verwendeten Temperatur eine bis höchstens vier Phasenumwandlungen in dem mindestens einen stöchiometrischen Material hervorruft,
   und wobei eine zweite Schicht B mindestens ein nicht-stöchiometrisches Material der Formel (2):

      MₓN_{y(1-z)}

      aufweist, wobei M mindestens ein metallisches oder halbmetallisches Element ist, bevorzugt ausgewählt aus der Gruppe bestehend aus Li, Be, Na, Mg, K, Ca, Sc, Ti, V, Cr, Mn, Fe, Co, Ni, Cu, Zn, Al, Ga, Rb, Sr, Y, Zr, Nb, Mo, Ru, Rh, Pd, Ag, Cd, In, Sn, Sb, Cs, Ba, La, Ce, Pr, Nd, Sm, Eu, Gd, Tb, Dy, Ho, Er, Th, Yb, Lu, Hf, Ta, W, Re, Os, Ir, Pt, Au, Hg, Tl, Pb und Bi, wobei x und y jeweils ganze Zahlen sind, die für eine stöchiometrische Bindung zwischen Mund N erforderlich sind, wobei gilt: 0 < z < 1 und 0 > z > -1, und wobei das Material in der Lage ist eine Reihe an Werten für z anzunehmen,
b8) Einleiten von N₂ in das Reaktorsystem am Reaktoreingang, sodass N₂ die mindestens zwei Schichten des Füllmaterials auf dem Weg vom Reaktoreingang zum Reaktorausgang durchströmt,
c8) Einleiten von H₂ oder H₂O in das Reaktorsystem am Reaktorausgang, sodass H₂ oder H₂O die mindestens zwei Schichten des Füllmaterials auf dem Weg vom Reaktorausgang zum Reaktoreingang durchströmt und am Reaktoreingang NH₃ erhalten wird.

Die im Zusammenhang mit dem erfindungsgemäßen Reaktorsystem beschriebenen Ausführungsformen und getroffenen Aussagen gelten *mutatis mutandis* auch für das erfindungsgemäße Verfahren zur Durchführung einer chemischen Reaktion im Gegenstromprinzip und umgekehrt.

Im Zusammenhang mit der vorliegenden Erfindung wird unter einem "Reaktorsystem" eine miteinander in Fluidverbindung stehende Gesamtheit von Reaktoren verstanden, die sich zur Durchführung einer chemischen Reaktion im Gegenstromprinzip eignet. Dabei kann das "Reaktorsystem" erfindungsgemäß aus einem einzigen Festbett-Reaktor bestehen, sodass der mindestens eine Reaktoreingang und der mindestens eine Reaktorausgang des Festbett-Reaktors auch gleichzeitig den mindestens eine Reaktoreingang und den mindestens eine Reaktorausgang des "Reaktorsystems" bilden. Gemäß dieser Ausführungsform der vorliegenden Erfindung befindet sich entsprechend das mindestens zwei Schichten aufweisende Füllmaterial in dem einen Festbett-Reaktor des "Reaktorsystems". Erfindungsgemäß kann allerdings auch vorgesehen sein, dass das "Reaktorsystem" beispielsweise zwei, drei oder eine Vielzahl von Festbett-Reaktoren umfasst, die in Reihe angeordnet sind und miteinander in Fluidverbindung stehen, sodass eine in den mindestens einen Reaktoreingang oder in den mindestens einen Reaktorausgang eingeleitete chemische Spezies, insbesondere ein in den mindestens einen Reaktoreingang oder in den mindestens einen Reaktorausgang eingeleitetes Gas, die einzelnen Festbett-Reaktoren nacheinander durchströmt. Dabei kann vorgesehen sein, dass sich die mindestens zwei Schichten des Füllmaterials in einem einzigen oder in unterschiedlichen Festbett-Reaktoren des "Reaktorsystems" befinden. So kann beispielsweise vorgesehen sein, dass die erste Schicht A mit dem mindestens einen stöchiometrischen Material der Formel (1) in einem ersten Festbett-Reaktor des "Reaktorsystems" angeordnet ist und die zweite Schicht B mit dem mindestens einen nicht-stöchiometrische Material der Formel (2) in einem zweiten Festbett-Reaktor des "Reaktorsystems" vorliegt. Das "Reaktorsystem" weist gemäß dieser Ausführungsform ein auf mehrere einzelne Festbett-Reaktoren verteiltes mindestens zwei Schichten umfassendes Füllmaterial auf, das zwischen dem mindestens einen Reaktoreingang des "Reaktorsystems" und dem mindestens einen Reaktorausgang des "Reaktorsystems" angeordnet ist.

Unter einem "stöchiometrisches Material" wird erfindungsgemäß ein Material, insbesondere eine Verbindung, bevorzugt eine Metallverbindung, verstanden, deren Atome eine gesetzmäße Verteilung entsprechend der Bindungsstöchiometrie im Gitter aufweisen. Dabei zeichnet sich ein "stöchiometrisches Material" erfindungsgemäß insbesondere dadurch aus, dass die Aufnahme/Abgabe von X bei der zur Durchführung der betreffenden chemischen Reaktion verwendeten Temperatur eine bis höchstens vier Phasenumwandlungen im Material hervorruft.

Erfindungsgemäß wird unter einem "nicht-stöchiometrischen Material" ein Material, insbesondere eine Verbindung, bevorzugt eine Metallverbindung, verstanden, deren Atome keine feste gesetzmäße Verteilung gemäß der Bindungsstöchiometrie im Gitter aufweisen. Insbesondere wird erfindungsgemäß unter einem "nicht-stöchiometrischen Material" ein Material, insbesondere eine Verbindung, bevorzugt eine Metallverbindung, der allgemeinen Formel MₓX_{y(1-z)} verstanden, bei der für z gilt: 0 < z < 1 und 0 > z > -1, wobei das Material in der Lage ist eine Reihe an unterschiedlichen Werten für z anzunehmen. Dabei ist (1-z) der Grad der Nicht-Stöchiometrie δ und kann entsprechend keinen Wert von 0 oder 1 annehmen. Somit zeichnet sich ein "nicht-stöchiometrisches Material" der allgemeinen Formel MₓX_{y(1-z)} dadurch aus, dass z, (1-z) und schließlich auch y(1-z) eine Reihe von Werten annehmen kann, aber keinen ganzzahligen Wert besitzt. Ein "nicht-stöchiometrisches Material" gemäß der vorliegenden Erfindung zeichnet sich insbesondere dadurch aus, dass die Aufnahme/Abgabe von X entweder keine oder eine Vielzahl von Phasenumwandlungen, das heißt, mindestens fünf, mindestens sechs oder mindestens acht Phasenumwandlungen, im Material hervorruft.

Im Zusammenhang mit der vorliegenden Erfindung wird unter den Begriffen "umfassend" und "aufweisend" verstanden, dass zusätzlich zu den von diesen Begriffen explizit erfassten Elementen noch weitere, nicht explizit genannte Elemente hinzutreten können. Im Zusammenhang mit der vorliegenden Erfindung wird unter diesen Begriffen auch verstanden, dass allein die explizit genannten Elemente erfasst werden und keine weiteren Elemente vorliegen. In dieser besonderen Ausführungsform ist die Bedeutung der Begriffe "umfassend" und "aufweisend" gleichbedeutend mit dem Begriff "bestehend aus". Darüber hinaus erfassen die Begriffe "umfassend" und "aufweisend" auch Zusammensetzungen, die neben den explizit genannten Elementen auch weitere nicht genannte Elemente enthalten, die jedoch von funktionell und qualitativ untergeordneter Natur sind. In dieser Ausführungsform sind die Begriffe "umfassend" und "aufweisend" gleichbedeutend mit dem Begriff "im Wesentlichen bestehend aus".

Unter dem Begriff "und/oder" wird in Zusammenhang mit der vorliegenden Erfindung verstanden, dass alle Mitglieder einer Gruppe, welche durch den Begriff "und/oder" verbunden sind, sowohl alternativ zueinander als auch jeweils untereinander kumulativ in einer beliebigen Kombination offenbart sind. Dies bedeutet für den Ausdruck "A, B und/oder C", dass folgender Offenbarungsgehalt darunter zu verstehen ist: a) A oder B oder C oder b) (A und B) oder c) (A und C) oder d) (B und C) oder e) (A und B und C).

Die vorliegende Erfindung wird im Folgenden anhand von Ausführungsbeispielen und exemplarischen Figuren illustriert. Der Erfindungsgedanke ist nicht auf diese Ausführungsbeispiele beschränkt.

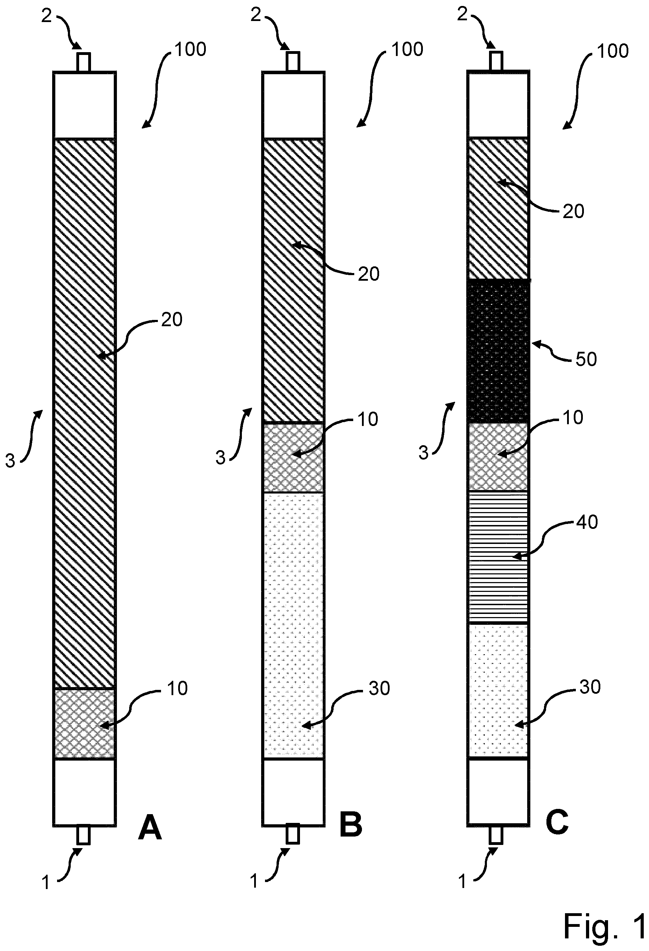

**Figur 1** zeigt schematisch drei unterschiedliche Ausführungsformen eines erfindungsgemäßen Reaktorsystems (100) zur Durchführung einer chemischen Reaktion im Gegenstromprinzip umfassend einen Festbett-Reaktor (3), einen Reaktoreingang (1), einen Reaktorausgang (2) und ein geschichtetes Füllmaterial, das mindestens zwei unterschiedliche Schichten umfasst.
Das Reaktorsystem (100) gemäß **Figur 1A** umfasst dabei im Bereich des Reaktoreingangs (1) eine erste Schicht A (10), die mindestens ein stöchiometrisches Material der allgemeinen Formel (1) aufweist, und eine daran angrenzende zweite Schicht B, die mindestens ein nicht-stöchiometrisches Material der allgemeinen Formel (2) aufweist, sodass eine in den Reaktoreingang (1) eingeleitete erste chemische Spezies die Schichten A (10) und B (20) durchströmt und am Reaktorausgang (2) eine modifizierte erste chemische Spezies erhalten wird. Durch anschließende Einleitung einer zweiten chemischen Spezies in den Reaktorausgang (2) und somit einer Umkehr der Flussrichtung, wird bewirkt, dass die zweite chemische Spezies die Schichten B (20) und A (10) durchströmt und am Reaktoreingang (1) eine modifizierte zweite chemische Spezies erhalten wird.
Die in **Figur 1B** dargestellte Ausführungsform des erfindungsgemäßen Reaktorsystems (100) umfasst insgesamt drei Schichten (10, 20, 30). Dabei ist die erste Schicht A (10) mit mindestens einem stöchiometrischen Material der allgemeinen Formel (1) zwischen der zweiten Schicht B (20) und der dritten Schicht C (30) angeordnet, wobei die Schichten B (20) und C (30) jeweils mindestens ein nicht-stöchiometrisches Material der allgemeinen Formel (2) aufweisen.
**Figur 1C** zeigt eine weitere Ausführungsform eines erfindungsgemäßen Reaktorsystems (100), dessen Reaktorbett ein Füllmaterial aus insgesamt fünf Schichten (10, 20, 30, 40, 50) umfasst. Dabei ist die erste Schicht A (10) mit mindestens einem stöchiometrischen Material der allgemeinen Formel (1) in der dargestellten Ausführungsform zwischen der zweiten Schicht B (20) und der dritten Schicht C (30) angeordnet, wobei an die Schicht A (10) jeweils die zusätzlichen Schichten D (40) und E (50) angrenzen. Bei den Schichten D (40) und E (50) kann es sich dabei jeweils um eine Schicht handeln, die entweder ein stöchiometrisches Material der allgemeinen Formel (1) oder ein nicht-stöchiometrisches Material der allgemeinen Formel (2) aufweist. So kann beispielsweise vorgesehen sein, dass nur die Schicht A (10) mindestens ein stöchiometrisches Material der allgemeinen Formel (1) aufweist und die Schichten B (20), C (30), D (40) und E (50) jeweils mindestens ein nicht-stöchiometrisches Material der allgemeinen Formel (2) aufweisen. Es kann abhängig von der in dem Reaktorsystem (100) durchgeführten chemischen Reaktion beispielweise auch vorgesehen sein, dass die Schichten A (10), D (40) und E (50) jeweils mindestens ein stöchiometrisches Material der allgemeinen Formel (1) aufweisen und die Schichten B (20) und C (30), D (40) jeweils mindestens ein nicht-stöchiometrisches Material der allgemeinen Formel (2) umfassen.

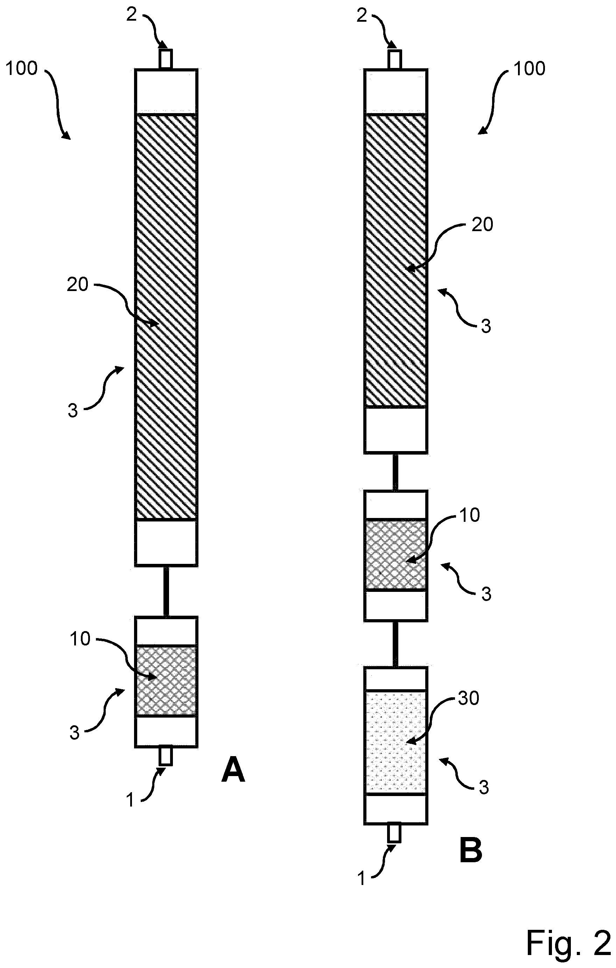

**Figur 2** zeigt schematisch zwei weitere Ausführungsformen eines erfindungsgemäßen Reaktorsystems (100) zur Durchführung einer chemischen Reaktion im Gegenstromprinzip.
Das in **Figur 2A** gezeigte Reaktorsystem (100) umfasst zwei miteinander in Fluidverbindung stehende Festbett-Reaktoren (3). Dabei weist der erste Festbett-Reaktor (3) den Reaktoreingang (1) des Reaktorsystems (100) auf und umfasst die erste Schicht A (10) mit dem mindestens einen stöchiometrischen Material der allgemeinen Formel (1). Der an den ersten Festbett-Reaktor (3) in Reihe angeschlossene zweite Festbett-Reaktor (3) umfasst die zweite Schicht B (20) mit dem mindestens einen nicht-stöchiometrischen Material der allgemeinen Formel (2). Der Reaktorausgang (2) des Reaktorsystems (100) befindet sich am zweiten Festbett-Reaktor (3), sodass ein in den Reaktoreingang (1) oder Reaktorausgang (2) eingeleitetes Gas die Schichten A und B (10, 20) in den zwei Festbett-Reaktoren (3) nacheinander durchströmt.
**Figur 2B** zeigt eine Ausführungsform des erfindungsgemäßen Reaktorsystems (100), bei der die insgesamt drei Schichten (10, 20, 30) des Füllmaterials auf drei in Reihe angeordnete und miteinander in Fluidverbindung stehende Festbett-Reaktoren (3) aufgeteilt sind. Dabei weist der erste Festbett-Reaktor (3) den Reaktoreingang (1) und Schicht C (30) mit einem nicht-stöchiometrischen Material der allgemeinen Formel (2) auf. Der daran angeschlossene zweite Festbett-Reaktor (3) umfasst in der dargestellten Ausführungsform die erste Schicht A (10) mit dem mindestens einen stöchiometrischen Material der allgemeinen Formel (1) und ist mit dem dritten Festbett-Reaktor (3) verbunden, der die zweite Schicht B (20) mit dem mindestens einen nicht-stöchiometrischen Material der allgemeinen Formel (2) und den Reaktorausgang (2) aufweist, sodass ein in den Reaktoreingang (1) oder Reaktorausgang (2) eingeleitetes Gas je nach Flussrichtung nacheinander die Schichten C, A und B (30, 10, 20) beziehungsweise B, A und C (20, 10, 30) durchströmt.

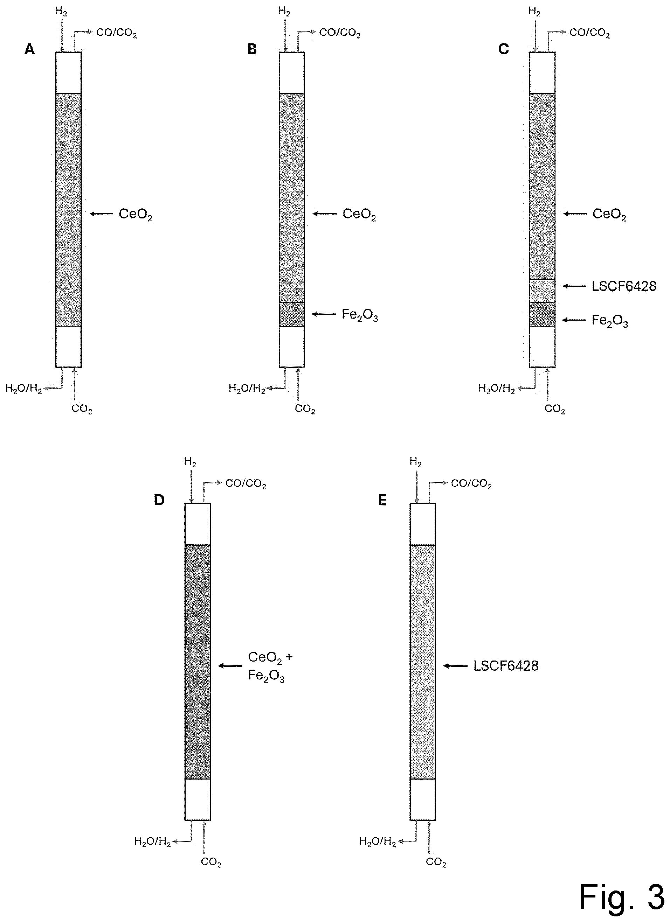

**Figur 3** zeigt die im Beispiel 1 der vorliegenden Erfindung für die Versuche A bis E verwendeten Reaktorsysteme mit den unterschiedlichen Füllmaterialien und Schichtungen.
**Figur 4** zeigt die im Beispiel 2 der vorliegenden Erfindung für die Versuche F bis H verwendeten Reaktorsysteme mit den unterschiedlichen Füllmaterialien und Schichtungen.

### Beispiel 1:

### Herstellung von Synthesegas im RWGS-Verfahren durch Chemical Looping im Gegenstromprinzip

Das Füllmaterial aus einem einzelnen oder mehreren Sauerstoffspeichermaterialien (OSM) mit einer Gesamtmasse von 1,6 g wurde für den jeweiligen Versuch in der in **Figur 2** dargestellten Anordnung in einem Quarzglasreaktor (Innendurchmesser = 4 mm) platziert und mit Glaswolle an seinem Platz fixiert. Der Versuchsreaktor wurde anschließend in vertikaler Ausrichtung in einem Klapprohrofen platziert. Es wurde ein elektronisch ansteuerbares 4-Wege-Ventil verwendet, das die beiden Reaktorenden, das Gaszufuhrsystem und die Analytiksektion so verbindet, dass der Reaktor in beiden Richtungen, das heißt, sowohl von oben nach unten, als auch von unten nach oben, durchströmt werden kann. Die unterschiedlichen Reaktorfüllungen bei den verschiedenen Versuchen sind in der nachstehenden **Tabelle 1** dargestellt.

**Tabelle 1: Reaktorfüllungen der Versuche A bis E**

| Versuch | Füllmaterial | | Verhältnis |
|---|---|---|---|
| | Nicht-stöchiometrisches Material | Stöchiometrisches Material | |
| **A** | CeO₂ (CeO_{2(1-z)}) | - | - |
| **B** | CeO₂ (CeO_{2(1-z)}) | Fe₂O₃ | 9:1 |
| **C** | CeO₂ (CeO_{2(1-z)}), LSCF6428 | Fe₂O₃ | 8:1:1 |
| **D** | CeO₂ (CeO_{2(1-z)}) | Fe₂O₃ | 9:1 (binäres Gemisch) |
| **E** | LSCF6428 | - | - |

Zu Beginn der Versuche wurden die OSM bei 800 °C unter H₂/Ar (dV(H₂)/dt = 6 ml min⁻¹, dV(Ar)/dt = 5 ml min⁻¹) reduziert. Anschließend wurden Oxidations- und Reduktionszyklen wie nachstehend beschrieben durchgeführt:
- Oxidationszyklus: dV(CO₂)/dt = 2 ml min⁻¹, dV(Ar)/dt = 5 ml min⁻¹ über einen Zeitraum von 10 min in Strömungsrichtung von unten nach oben,
- $Spülphase mit dV \left(Ar\right) / dt = 5 ml {min}^{- 1} für 5 min ,$
- Reduktionszyklus: dV(H₂)/dt = 6 ml min⁻¹, dV(Ar)/dt = 5 ml min⁻¹ über einen Zeitraum von 10 min in Strömungsrichtung von oben nach unten,
- $Spülphase mit dV \left(Ar\right) / dt = 20 ml {min}^{- 1} über 10 min ,$

Die Konzentrationen von Ar (m/z = 40), H₂ (m/z =2), CO₂ (m/z = 44) und CO (m/z = 28) im Reaktionsprodukt wurden jeweils durch ein Massenspektrometer (Pfeiffer Vacuum, OmniStar) bestimmt. Die in den Versuchen A bis E erzielte molare CO-Ausbeute und die CO-Produktivität pro Zyklus sind in der nachstehenden **Tabelle 2** dargestellt.

**Tabelle 2: Molare CO-Ausbeute und die CO-Produktivität pro Zyklus bei unterschiedlichen Reaktorfüllungen**

| Versuch | Molare CO-Ausbeute | CO-Produktivität pro Zyklus [mL/g OSM] |
|---|---|---|
| **A** | 98,2% | 4,9 |
| **B** | 97,1% | 9,1 |
| **C** | 98,4% | 11,05 |
| **D** | 94% | 4,5 |
| **E** | 79% | 5,9 |

Der Ergebnisse der **Versuche A bis E** zeigen, dass erfindungsgemäße Reaktorsysteme mit einem Füllmaterial, das aus mindestens einer Schicht aus einem stöchiometrischen Material und mindestens einer Schicht aus einem nicht-stöchiometrischen Material gemäß den **Versuchen B und C** eine deutliche höhere CO-Produktivität pro Zyklus besitzen als Reaktorsysteme deren Füllmaterial entweder nur nicht-stöchiometrisches Material umfasst **(Versuche A und E)** oder deren Füllmaterial keine Schichtung, sondern ein binäres Gemisch aus einem stöchiometrischen Material und einem nicht-stöchiometrischen Material, aufweist **(Versuch D).** Dabei konnte mit den erfindungsgemäßen Reaktorsystemen eine ähnlich hohe **(Versuch B)** oder sogar höhere **(Versuch C)** CO-Ausbeute erzielt werden wie bei der ausschließlichen Verwendung von CeO₂ (CeO_{2(1-z)}) als nicht-stöchiometrisches Material **(Versuch A).**

### Beispiel 2:

### Herstellung von CO im DRM-Verfahren durch Chemical Looping im Gegenstromprinzip

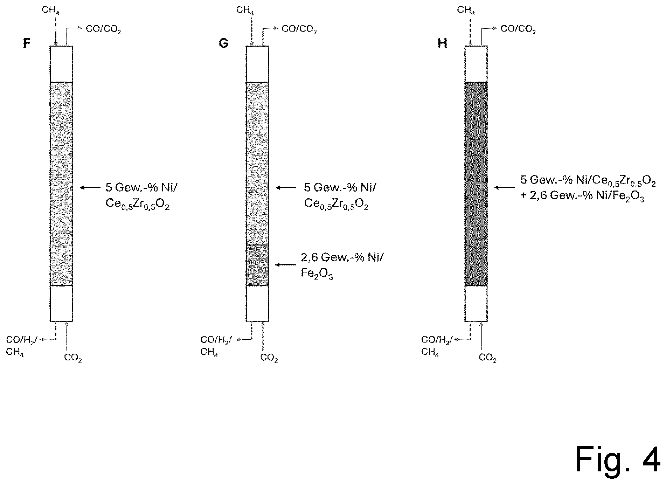

Das Füllmaterial aus einem einzelnen oder mehreren Sauerstoffspeichermaterialien (OSM) mit einer Gesamtmasse von 0,5 g wurde für den jeweiligen Versuch in der in **Figur 4** dargestellten Anordnung in einem Quarzglasreaktor (Innendurchmesser = 4 mm) platziert und mit Glaswolle an seinem Platz fixiert. Der Versuchsreaktor entspricht dem in **Beispiel 1** beschriebenen Aufbau. Im Gegensatz zur RWGS wird die Regeneration des OSM im DRM-Verfahren nicht mit Wasserstoff, sondern mit Methan durchgeführt. Zur Aktivierung des Methans wurden sowohl das nicht-stöchiometrische als auch das stöchiometrische OSM mit Ni promotiert. Die unterschiedlichen Reaktorfüllungen bei den verschiedenen Versuchen sind in der nachstehenden **Tabelle 3** dargestellt.

**Tabelle 3: Reaktorfüllungen der Versuche F bis H**

| Versuch | Füllmaterial | | Verhältnis |
|---|---|---|---|
| | Nicht-stöchiometrisches Material | Stöchiometrisches Material | |
| **F** | 5 Gew.-% Ni/Ce_{0,5}Zr_{0,5}O_{2-δ} | - | - |
| **G** | 5 Gew.-% Ni/Ce_{0,5}Zr_{0,5}O_{2-δ} | 2,6 Gew.-% Ni/Fe₂O₃ | 4:1 |
| **H** | 5 Gew.-% Ni/Ce_{0,5}Zr_{0,5}O_{2-δ} | 2,6 Gew.-% Ni/Fe₂O₃ | 4:1 (binäres Gemisch) |

Zu Beginn der Versuche wurden die OSM unter Ar auf 700 °C geheizt. Anschließend wurden Oxidations- und Reduktionszyklen wie nachstehend beschrieben durchgeführt:
- Oxidationszyklus: dV(CO₂)/dt = 2 ml min⁻¹, dV(Ar)/dt = 12 ml min⁻¹ über einen Zeitraum von 3 min in Strömungsrichtung von unten nach oben,
- $Spülphase mit dV \left(Ar\right) / dt = 14 ml {min}^{- 1} für 3 min ,$
- Reduktionszyklus: dV(CD₄)/dt = 2 ml min⁻¹, dV(Ar)/dt = 12 ml min⁻¹ über einen Zeitraum von 3 min in Strömungsrichtung von oben nach unten,
- $Spülphase mit dV \left(Ar\right) / dt = 14 ml {min}^{- 1} über 3 min ,$

Die Konzentrationen von Ar (m/z = 40), D₂ (m/z = 4), CO₂ (m/z = 44), CD4 (m/z = 20, 19) und CO (m/z = 28) im Reaktionsprodukt wurden jeweils durch ein Massenspektrometer (Pfeiffer Vacuum, OmniStar) bestimmt. Die in den Versuchen F bis H erzielte molare CO-Ausbeute und die CO-Produktivität pro Zyklus sind in der nachstehenden **Tabelle 4** dargestellt. Die CO-Produktivität pro CO₂-Zyklus ist berechnet für den Zeitraum im CO₂-Zyklus, in dem ein Umsatz > 99% realisiert werden konnte.

**Tabelle 4: Molare CO-Ausbeute und die CO-Produktivität pro Zyklus bei unterschiedlichen Reaktorfüllungen**

| Versuch | Molare CO-Ausbeute | CO-Produktivität pro CO₂- Zyklus [mL/g OSM] |
|---|---|---|
| **F** | 99 % | 5,8 |
| **G** | 99 % | 6,8 |
| **H** | 98,4% | 1,6 |

Der Ergebnisse der **Versuche F bis H** zeigen, dass erfindungsgemäße Reaktorsysteme mit einem Füllmaterial, das aus mindestens einer Schicht aus einem stöchiometrischen Material und mindestens einer Schicht aus einem nicht-stöchiometrischen Material gemäß dem **Versuch G** eine höhere CO-Produktivität pro CO₂-Zyklus besitzen als Reaktorsysteme, deren Füllmaterial entweder nur nicht-stöchiometrisches Material umfasst **(Versuch F)** oder deren Füllmaterial keine Schichtung, sondern ein binäres Gemisch aus einem stöchiometrischen Material und einem nicht-stöchiometrischen Material, aufweist **(Versuch H).** Dabei wird hier besonders ersichtlich, dass die physikalische Mischung sogar nachteilig sein kann. In diesem Fall hat das Vorhandensein des stöchiometrischen Materials (2,6 Gew.-% Ni/Fe₂O₃) am falschen Reaktorende zu einem schnellen Abfall der CO-Ausbeute und damit einer Reduktion der CO-Produktivität bei hohen CO-Ausbeuten im Vergleich zu **Versuch F** ohne stöchiometrisches Material geführt. Der vorteilhafte Effekt des stöchiometrischen Materials konnte ausschließlich in der geschichteten Anordnung **(Versuch G)** realisiert werden.

## Patentansprüche

1. Reaktorsystem (100) zur Durchführung einer chemischen Reaktion im Gegenstromprinzip, umfassend:
i) mindestens einen Festbett-Reaktor (3),
ii) mindestens einen Reaktoreingang (1) des Reaktorsystems,
iii) mindestens einen Reaktorausgang (2) des Reaktorsystems, und
iv) ein zwischen dem mindestens einen Reaktoreingang (1) und dem mindestens einen Reaktorausgang (2) angeordnetes Füllmaterial,
**dadurch gekennzeichnet, dass** das Füllmaterial zwischen dem Reaktoreingang (1) und dem Reaktorausgang (2) mindestens zwei unterschiedliche Schichten (10, 20) aufweist, wobei eine erste Schicht A (10) mindestens ein stöchiometrisches Material der Formel (1):
MₓX_{y}
aufweist, wobei M mindestens ein metallisches oder halbmetallisches Element ist, wobei X mindestens ein Element ist ausgewählt aus der Gruppe bestehend aus O, N, C, S, und H, und wobei x und y jeweils ganze Zahlen sind, die für eine stöchiometrische Bindung zwischen M und X erforderlich sind,
wobei die Aufnahme/Abgabe von X bei der zur Durchführung der chemischen Reaktion verwendeten Temperatur eine bis höchstens vier Phasenumwandlungen in dem mindestens einen stöchiometrischen Material hervorruft,
und wobei eine zweite Schicht B (20) mindestens ein nicht-stöchiometrisches Material der Formel (2):
MₓX_{y(1-z)}
aufweist, wobei M mindestens ein metallisches oder halbmetallisches Element ist, wobei X mindestens ein Element ist ausgewählt aus der Gruppe bestehend aus O, N, C, S, und H, wobei x und y jeweils ganze Zahlen sind, die für eine stöchiometrische Bindung zwischen M und X erforderlich sind, wobei gilt: 0 < z < 1 und 0 > z > -1, und wobei das Material in der Lage ist eine Reihe an Werten für z anzunehmen.

2. Reaktorsystem (100) nach Anspruch 1, **dadurch gekennzeichnet, dass** das mindestens eine Füllmaterial zwischen dem Reaktoreingang (1) und dem Reaktorausgang (2) mindestens drei Schichten (10, 20, 30) aufweist,
wobei die dritte Schicht C (30) mindestens ein nicht-stöchiometrisches Material der Formel (2) aufweist, wobei M mindestens ein metallisches oder halbmetallisches Element ist, wobei X mindestens ein Element ist ausgewählt aus der Gruppe bestehend aus O, N, C, S, und H, wobei x und y jeweils ganze Zahlen sind, die für eine stöchiometrische Bindung zwischen M und X erforderlich sind, wobei gilt: 0 < z < 1 und 0 > z > -1, wobei das Material in der Lage ist eine Reihe an Werten für z anzunehmen, und
wobei die erste, mindestens ein stöchiometrisches Material der Formel (1) aufweisende Schicht A (10) des Füllmaterials zwischen der zweiten Schicht B (20) und der dritten Schicht C (30) angeordnet ist.

3. Reaktorsystem (100) nach Anspruch 2, **dadurch gekennzeichnet, dass** es sich bei dem nicht-stöchiometrischen Material der zweiten Schicht B (20) und dem nicht-stöchiometrischen Material der dritten Schicht C (30) um unterschiedliche Materialien handelt.

4. Reaktorsystem (100) nach einem der Ansprüche 1 bis 3, **dadurch gekennzeichnet, dass** das Verhältnis (w/w) von nicht-stöchiometrischem Material zu stöchiometrischem Material in dem Füllmaterial des Reaktorsystems 1 bis 100, bevorzugt 2 bis 50, bevorzugt 5 bis 20, besonders bevorzugt 8 bis 15, beträgt.

5. Reaktorsystem (100) nach einem der Ansprüche 1 bis 4, **dadurch gekennzeichnet, dass** es sich bei dem mindestens einen stöchiometrischen Material der Formel (1) und dem mindestens einen nicht-stöchiometrischen Material der Formel (2) jeweils um ein Sauerstoffspeichermaterial, bevorzugt um ein Oxid, handelt.

6. Reaktorsystem (100) nach Anspruch 5, **dadurch gekennzeichnet, dass** das mindestens eine nicht-stöchiometrische Material der Formel (2) der zweiten Schicht B (20) und/oder das mindestens eine nicht-stöchiometrische Material der Formel (2) der dritten Schicht C (30) jeweils unabhängig voneinander ausgewählt ist aus:
i) Oxiden der Fluoritstruktur MO_{2(1-z)}, bevorzugt mit M = Ce oder M = AₙB₁₋ₙ mit A = Ce und B = ein metallisches Element, und
ii) Perovskiten der Struktur ABO_{3(1-z)}, wobei A und/oder B die Form A1₁₋ₘA2ₘ und/oder B1₁₋ₚB2ₚ annehmen können und gilt: 0 < m < 1 und 0 < p < 1, und wobei A, A1, A2, B, B1 und B2 jeweils unabhängig voneinander ausgewählt sind aus der Gruppe bestehend aus La, Sr, Fe, Mn, Co, Fe.

7. Reaktorsystem (100) nach Anspruch 5 oder 6, **dadurch gekennzeichnet, dass** es sich bei dem mindestens einen stöchiometrischen Material der Formel (1) um ein Oxid handelt mit i) M = Fe oder ii) M = AₙB₁₋ₙ, wobei gilt: A = Fe und B = ein metallisches Element.

8. Reaktorsystem (100) nach einem der Ansprüche 1 bis 4, **dadurch gekennzeichnet, dass** es sich bei X des mindestens einen stöchiometrischen Materials der Formel (1) und bei X des mindestens einen nicht-stöchiometrischen Materials der Formel (2) jeweils um Stickstoff (N) handelt.

9. Reaktorsystem (100) nach einem der Ansprüche 1 bis 8, wobei das Reaktorsystem eine separate Temperierung der mindestens zwei unterschiedlichen Schichten des Füllmaterials erlaubt.

10. Verfahren zur Durchführung einer chemischen Reaktion im Gegenstromprinzip, umfassend die Schritte:
a) Bereitstellung eines Reaktorsystems gemäß einem der Ansprüche 1 bis 9,
b) Einleiten einer ersten chemischen Spezies in das Reaktorsystem am Reaktoreingang, sodass die erste chemische Spezies die mindestens zwei Schichten des Füllmaterials auf dem Weg vom Reaktoreingang zum Reaktorausgang durchströmt, und
c) Einleiten einer zweiten chemischen Spezies in das Reaktorsystem am Reaktorausgang, sodass die zweite chemische Spezies die mindestens zwei Schichten des Füllmaterials auf dem Weg vom Reaktorausgang zum Reaktoreingang durchströmt,
wobei in Schritt b) am Reaktorausgang mindestens eine modifizierte erste chemische Spezies erhalten wird und/oder wobei im Schritt c) am Reaktoreingang mindestens eine modifizierte zweite chemische Spezies erhalten wird.

11. Verfahren nach Anspruch 10, **dadurch gekennzeichnet, dass** die Schritte b) und c) unter Flussrichtungsumkehr mindestens einmal wiederholt werden, sodass die erste chemische Spezies bei Wiederholung der Schritte b) und c) in einem Schritt b1) am Reaktorausgang in das Reaktorsystem eingeleitet wird und die zweite chemische Spezies bei Wiederholung der Schritte b) und c) in einem Schritt c1) am Reaktoreingang in das Reaktorsystem eingeleitet wird und wobei die Schritte b)/c) und b1)/c1) alternierend nacheinander durchgeführt werden.

12. Verfahren nach Anspruch 10 oder 11, **dadurch gekennzeichnet, dass** es sich bei dem Verfahren um ein Verfahren zur Herstellung von CO oder Synthesegas durch Chemical Looping im Gegenstromverfahren handelt, wobei es sich bei dem in Schritt a) bereitgestellten Reaktorsystem um einen Reaktorsystem gemäß einem der Ansprüche 5 bis 7 oder 9 handelt.

13. Verfahren nach Anspruch 12, **dadurch gekennzeichnet, dass** die erste chemische Spezies CO₂ ist und die zweite chemische Spezies H₂ ist.

14. Verfahren nach Anspruch 12 oder 13, **dadurch gekennzeichnet, dass** das Verhältnis (w/w) von nicht-stöchiometrischem Material zu stöchiometrischem Material in dem Füllmaterial des in Schritt a) bereitgestellten Reaktorsystems mindestens 2, bevorzugt mindestens 5, bevorzugt mindestens 8, bevorzugt mindestens 10, beträgt.

15. Verfahren nach Anspruch 13 oder 14, **dadurch gekennzeichnet, dass** die Kohlenstoffmonooxid (CO)-Produktivität pro Zyklus mindestens 6 ml/g, bevorzugt mindestens 8 ml/g, bevorzugt mindestens 10 ml/g, bevorzugt mindestens 20 ml/g, bevorzugt mindestens 30 ml/g, beträgt, jeweils bezogen auf das Gesamtgewicht des Füllmaterials.

16. Verfahren nach einem der Ansprüche 13 bis 15, **dadurch gekennzeichnet, dass** die Kohlenstoffmonooxid (CO)-Ausbeute mindestens 90%, bevorzugt mindestens 92%, bevorzugt mindestens 94%, bevorzugt mindestens 96%, besonders bevorzugt mindestens 98%, beträgt, jeweils molarer Anteil von CO im Produktstrom des CO₂-Konvertierungszyklus.

17. Verfahren nach Anspruch 10 oder 11, **dadurch gekennzeichnet, dass** das Verfahren ein Verfahren zur Herstellung von CO oder Synthesegas durch Trockenreformierung von Methan (DRM) mittels Chemical Looping im Gegenstromprinzip ist, wobei es sich bei dem in Schritt a) bereitgestellten Reaktorsystem um einen Reaktorsystem gemäß einem der Ansprüche 5 bis 7 oder 9 handelt.

18. Verfahren nach Anspruch 17, **dadurch gekennzeichnet, dass** die erste chemische Spezies CO₂ und die zweite chemische Spezies Methan (CH₄) ist.

19. Verfahren nach Anspruch 10 oder 11, **dadurch gekennzeichnet, dass** das Verfahren ein Verfahren zur Herstellung von Ammoniak durch Chemical Looping (Chemical looping ammonia synthesis - CLAS) im Gegenstromprinzip ist, wobei es sich bei dem in Schritt a) bereitgestellten Reaktorsystem um einen Reaktorsystem gemäß Anspruch 8 handelt.

## Claims

1. A reactor system (100) for carrying out a chemical reaction using the countercurrent principle, comprising:
i) at least one fixed-bed reactor (3),
ii) at least one reactor inlet (1) of the reactor system,
iii) at least one reactor outlet (2) of the reactor system, and
iv) a filler material arranged between the at least one reactor inlet (1) and the at least one reactor outlet (2),
**characterized in that** the filler material between the reactor inlet (1) and the reactor outlet (2) has at least two different layers (10, 20), wherein a first layer A (10) has at least one stoichiometric material of formula (1):
MₓX_{y}
wherein M is at least one metallic or semimetallic element, wherein X is at least one element selected from the group consisting of O, N, C, S and H, and wherein x and y are each integers required for a stoichiometric bond between M and X,
wherein the uptake/release of X at the temperature used for carrying out the chemical reaction causes one to at most four phase transitions in the at least one stoichiometric material,
and wherein a second layer B (20) has at least one non-stoichiometric material of formula (2):
MₓX_{y(1-z)}
wherein M is at least one metallic or semimetallic element, wherein X is at least one element selected from the group consisting of O, N, C, S and H, wherein x and y are each integers required for a stoichiometric bond between M and X, wherein the following applies: 0 < z < 1 and 0 > z > -1, and wherein the material is capable of taking on a range of values for z.

2. The reactor system (100) of claim 1, **characterized in that** the at least one filler material between the reactor inlet (1) and the reactor outlet (2) has at least three layers (10, 20, 30),
wherein the third layer C (30) has at least one non-stoichiometric material of formula (2), wherein M is at least one metallic or semimetallic element, wherein X is at least one element selected from the group consisting of O, N, C, S and H, wherein x and y are each integers required for a stoichiometric bond between M and X, wherein the following applies: 0 < z < 1 and 0 > z > -1, wherein the material is capable of taking on a range of values for z, and
wherein the first layer A (10) of the filler material, having at least one stoichiometric material of formula (1), is arranged between the second layer B (20) and the third layer C (30).

3. The reactor system (100) of claim 2, **characterized in that** the non-stoichiometric material of the second layer B (20) and the non-stoichiometric material of the third layer C (30) are different materials.

4. The reactor system (100) of any one of claims 1 to 3, **characterized in that** the ratio (w/w) of non-stoichiometric material to stoichiometric material in the filler material of the reactor system is from 1 to 100, preferably 2 to 50, preferably 5 to 20, particularly preferably 8 to 15.

5. The reactor system (100) of any one of claims 1 to 4, **characterized in that** the at least one stoichiometric material of formula (1) and the at least one non-stoichiometric material of formula (2) are each an oxygen storage material, preferably an oxide.

6. The reactor system (100) of claim 5, **characterized in that** the at least one non-stoichiometric material of formula (2) of the second layer B (20) and/or the at least one non-stoichiometric material of formula (2) of the third layer C (30) are each independently selected from:
i) oxides of the fluorite structure MO_{2(1-z)}, preferably with M = Ce or M = AₙB₁₋ₙ, with A = Ce and B = a metallic element, and
ii) perovskites of the structure ABO_{3(1-z)}, wherein A and/or B can take the form A1₁₋ₘA2ₘ and/or B1₁₋ₚB2ₚ and wherein the following applies: 0 < m < 1 and 0 < p < 1, and wherein A, A1, A2, B, B1 and B2 are each independently selected from the group consisting of La, Sr, Fe, Mn, Co, Fe.

7. The reactor system (100) of claim 5 or 6, **characterized in that** the at least one stoichiometric material of formula (1) is an oxide with i) M = Fe or ii) M = AₙB₁₋ₙ, wherein the following applies: A = Fe and B = a metallic element.

8. The reactor system (100) of any one of claims 1 to 4, **characterized in that** X of the at least one stoichiometric material of formula (1) and X of the at least one non-stoichiometric material of formula (2) are each nitrogen (N).

9. The reactor system (100) of any one of claims 1 to 8, wherein the reactor system allows a separate tempering of the at least two different layers of the filler material.

10. A method for carrying out a chemical reaction using the countercurrent principle, comprising the steps of:
a) providing a reactor system according to any one of claims 1 to 9,
b) introducing a first chemical species into the reactor system at the reactor inlet such that the first chemical species flows through the at least two layers of the filler material while passing from the reactor inlet to the reactor outlet, and
c) introducing a second chemical species into the reactor system at the reactor outlet such that the second chemical species flows through the at least two layers of the filler material while passing from the reactor outlet to the reactor inlet,
wherein, in step b), at least one modified first chemical species is obtained at the reactor outlet and/or wherein, in step c), at least one modified second chemical species is obtained at the reactor inlet.

11. The method of claim 10, **characterized in that** steps b) and c) are repeated at least once with the flow direction reversed, such that, when steps b) and c) are repeated, the first chemical species is introduced into the reactor system at the reactor outlet in a step b1) and, when steps b) and c) are repeated, the second chemical species is introduced into the reactor system at the reactor inlet in a step c1), and wherein steps b)/c) and b1)/c1) are carried out alternately in succession.

12. The method of claim 10 or 11, **characterized in that** the method is a method for producing CO or synthesis gas by Chemical Looping using a countercurrent method, wherein the reactor system provided in step a) is a reactor system according to any one of claims 5 to 7 or 9.

13. The method of claim 12, **characterized in that** the first chemical species is CO₂ and the second chemical species is H₂.

14. The method of claim 12 or 13, **characterized in that** the ratio (w/w) of non-stoichiometric material to stoichiometric material in the filler material of the reactor system provided in step a) is at least 2, preferably at least 5, preferably at least 8, preferably at least 10.

15. The method of claim 13 or 14, **characterized in that** the carbon monoxide (CO) productivity per cycle is at least 6 ml/g, preferably at least 8 ml/g, preferably at least 10 ml/g, preferably at least 20 ml/g, preferably at least 30 ml/g, each based on the total weight of the filler material.

16. The method of any one of claims 13 to 15, **characterized in that** the carbon monoxide (CO) yield is at least 90%, preferably at least 92%, preferably at least 94%, preferably at least 96%, particularly preferably at least 98%, each as the molar proportion of CO in the product stream of the CO₂ conversion cycle.

17. The method of claim 10 or 11, **characterized in that** the method is a method for producing CO or synthesis gas by dry reforming of methane (DRM) by means of Chemical Looping using the countercurrent principle, wherein the reactor system provided in step a) is a reactor system according to any one of claims 5 to 7 or 9.

18. The method of claim 17, **characterized in that** the first chemical species is CO₂ and the second chemical species is methane (CH₄).

19. The method of claim 10 or 11, **characterized in that** the method is a method for producing ammonia by Chemical Looping (Chemical looping ammonia synthesis - CLAS) using the countercurrent principle, wherein the reactor system provided in step a) is a reactor system according to claim 8.

## Revendications

1. Un système de réacteur (100) pour réaliser une réaction chimique en utilisant le principe du contre-courant, comprenant :
i) au moins un réacteur à lit fixe (3),
ii) au moins une entrée de réacteur (1) du système de réacteur,
iii) au moins une sortie de réacteur (2) du système de réacteur, et
iv) un matériau de remplissage agencé entre l'au moins une entrée de réacteur (1) et l'au moins une sortie de réacteur (2),
**caractérisé en ce que** le matériau de remplissage entre l'entrée de réacteur (1) et la sortie de réacteur (2) a au moins deux couches différentes (10, 20), dans lequel une première couche A (10) a au moins un matériau stœchiométrique de formule (1) :
MₓX_{y}
dans laquelle M est au moins un élément métallique ou semi-métallique, dans laquelle X est au moins un élément choisi dans le groupe constitué de O, N, C, S et H, et dans laquelle x et y sont chacun des nombres entiers requis pour une liaison stœchiométrique entre M et X,
dans lequel l'absorption/la libération de X à la température utilisée pour réaliser la réaction chimique provoque d'une à au plus quatre transitions de phase dans l'au moins un matériau stœchiométrique,
et dans lequel une deuxième couche B (20) a au moins un matériau non stœchiométrique de formule (2) :
MₓX_{y(1-z)}
dans laquelle M est au moins un élément métallique ou semi-métallique, dans laquelle X est au moins un élément choisi dans le groupe constitué de O, N, C, S et H, dans laquelle x et y sont chacun des nombres entiers requis pour une liaison stœchiométrique entre M et X, dans laquelle les relations suivantes s'appliquent : 0 < z < 1 et 0 > z > -1, et dans laquelle le matériau est apte à prendre une plage de valeurs pour z.

2. Le système de réacteur (100) selon la revendication 1, **caractérisé en ce que** l'au moins un matériau de remplissage entre l'entrée de réacteur (1) et la sortie de réacteur (2) a au moins trois couches (10, 20, 30),
dans lequel la troisième couche C (30) a au moins un matériau non stœchiométrique de formule (2), dans laquelle M est au moins un élément métallique ou semi-métallique, dans laquelle X est au moins un élément choisi dans le groupe constitué de O, N, C, S et H, dans laquelle x et y sont chacun des nombres entiers requis pour une liaison stœchiométrique entre M et X, dans laquelle les relations suivantes s'appliquent : 0 < z < 1 et 0 > z > -1, dans laquelle le matériau est apte à prendre une plage de valeurs pour z, et
dans lequel la première couche A (10) du matériau de remplissage, ayant au moins un matériau stœchiométrique de formule (1), est agencée entre la deuxième couche B (20) et la troisième couche C (30).

3. Le système de réacteur (100) selon la revendication 2, **caractérisé en ce que** le matériau non stœchiométrique de la deuxième couche B (20) et le matériau non stœchiométrique de la troisième couche C (30) sont des matériaux différents.

4. Le système de réacteur (100) selon l'une quelconque des revendications 1 à 3, **caractérisé en ce que** le rapport (p/p) du matériau non stœchiométrique au matériau stœchiométrique dans le matériau de remplissage du système de réacteur est de 1 à 100, de préférence de 2 à 50, de préférence de 5 à 20, particulièrement préférablement de 8 à 15.

5. Le système de réacteur (100) selon l'une quelconque des revendications 1 à 4, **caractérisé en ce que** l'au moins un matériau stœchiométrique de formule (1) et l'au moins un matériau non stœchiométrique de formule (2) sont chacun un matériau de stockage d'oxygène, de préférence un oxyde.

6. Le système de réacteur (100) selon la revendication 5, **caractérisé en ce que** l'au moins un matériau non stœchiométrique de formule (2) de la deuxième couche B (20) et/ou l'au moins un matériau non stœchiométrique de formule (2) de la troisième couche C (30) sont chacun indépendamment choisis parmi :
i) des oxydes de la structure fluorine MO_{2(1-z)}, de préférence avec M = Ce ou M = AₙB₁₋ₙ, avec A = Ce et B = un élément métallique, et
ii) des pérovskites de la structure ABO_{3(1-z)}, dans lesquelles A et/ou B peuvent prendre la forme A1₁₋ₘA2ₘ et/ou B1₁₋ₚB2ₚ et dans lesquelles les relations suivantes s'appliquent : 0 < m < 1 et 0 < p < 1, et dans lesquelles A, A1, A2, B, B1 et B2 sont chacun indépendamment choisis dans le groupe constitué de La, Sr, Fe, Mn, Co, Fe.

7. Le système de réacteur (100) selon la revendication 5 ou 6, **caractérisé en ce que** l'au moins un matériau stœchiométrique de formule (1) est un oxyde avec i) M = Fe ou ii) M = AₙB₁₋ₙ, dans lequel les relations suivantes s'appliquent : A = Fe et B = un élément métallique.

8. Le système de réacteur (100) selon l'une quelconque des revendications 1 à 4, **caractérisé en ce que** X de l'au moins un matériau stœchiométrique de formule (1) et X de l'au moins un matériau non stœchiométrique de formule (2) sont chacun de l'azote (N).

9. Le système de réacteur (100) selon l'une quelconque des revendications 1 à 8, dans lequel le système de réacteur permet un tempérage séparé des au moins deux couches différentes du matériau de remplissage.

10. Un procédé pour réaliser une réaction chimique en utilisant le principe du contre-courant, comprenant les étapes :
a) fournir un système de réacteur selon l'une quelconque des revendications 1 à 9,
b) introduire une première espèce chimique dans le système de réacteur à l'entrée de réacteur, de telle sorte que la première espèce chimique traverse les au moins deux couches du matériau de remplissage sur le trajet de l'entrée de réacteur à la sortie de réacteur, et
c) introduire une deuxième espèce chimique dans le système de réacteur à la sortie de réacteur, de telle sorte que la deuxième espèce chimique traverse les au moins deux couches du matériau de remplissage sur le trajet de la sortie de réacteur à l'entrée de réacteur,
dans lequel, à l'étape b), au moins une première espèce chimique modifiée est obtenue à la sortie de réacteur et/ou dans lequel, à l'étape c), au moins une deuxième espèce chimique modifiée est obtenue à l'entrée de réacteur.

11. Le procédé selon la revendication 10, **caractérisé en ce que** les étapes b) et c) sont répétées au moins une fois avec inversion du sens d'écoulement, de telle sorte que, lorsque les étapes b) et c) sont répétées, la première espèce chimique est introduite dans le système de réacteur à la sortie de réacteur lors d'une étape b1) et, lorsque les étapes b) et c) sont répétées, la deuxième espèce chimique est introduite dans le système de réacteur à l'entrée de réacteur lors d'une étape c1), et dans lequel les étapes b)/c) et b1)/c1) sont réalisées alternativement l'une après l'autre.

12. Le procédé selon la revendication 10 ou 11, **caractérisé en ce que** le procédé est un procédé de production de CO ou de gaz de synthèse par Chemical Looping en utilisant un procédé à contre-courant, dans lequel le système de réacteur fourni à l'étape a) est un système de réacteur selon l'une quelconque des revendications 5 à 7 ou 9.

13. Le procédé selon la revendication 12, **caractérisé en ce que** la première espèce chimique est du CO₂ et la deuxième espèce chimique est du H₂.

14. Le procédé selon la revendication 12 ou 13, **caractérisé en ce que** le rapport (p/p) du matériau non stœchiométrique au matériau stœchiométrique dans le matériau de remplissage du système de réacteur fourni à l'étape a) est d'au moins 2, de préférence d'au moins 5, de préférence d'au moins 8, de préférence d'au moins 10.

15. Le procédé selon la revendication 13 ou 14, **caractérisé en ce que** la productivité en monoxyde de carbone (CO) par cycle est d'au moins 6 ml/g, de préférence d'au moins 8 ml/g, de préférence d'au moins 10 ml/g, de préférence d'au moins 20 ml/g, de préférence d'au moins 30 ml/g, dans chaque cas par rapport au poids total du matériau de remplissage.

16. Le procédé selon l'une quelconque des revendications 13 à 15, **caractérisé en ce que** le rendement en monoxyde de carbone (CO) est d'au moins 90 %, de préférence d'au moins 92 %, de préférence d'au moins 94 %, de préférence d'au moins 96 %, particulièrement préférablement d'au moins 98 %, dans chaque cas en tant que proportion molaire de CO dans le flux de produit du cycle de conversion du CO₂.

17. Le procédé selon la revendication 10 ou 11, **caractérisé en ce que** le procédé est un procédé de production de CO ou de gaz de synthèse par reformage à sec du méthane (DRM) au moyen d'une Chemical Looping en utilisant le principe du contre-courant, dans lequel le système de réacteur fourni à l'étape a) est un système de réacteur selon l'une quelconque des revendications 5 à 7 ou 9.

18. Le procédé selon la revendication 17, **caractérisé en ce que** la première espèce chimique est du CO₂ et la deuxième espèce chimique est du méthane (CH₄).

19. Le procédé selon la revendication 10 ou 11, **caractérisé en ce que** le procédé est un procédé de production d'ammoniac par Chemical Looping (synthèse d'ammoniac Chemical looping - CLAS), en utilisant le principe du contre-courant, dans lequel le système de réacteur fourni à l'étape a) est un système de réacteur selon la revendication 8.
